# EUROPEAN PATENT SPECIFICATION

(11) **EP 0 799 539 B1**
(45) Date of publication and mention of the grant of the patent: **03.03.1999**
(21) Application number: 95942085.2
(22) Date of filing: 08.12.1995
(51) Int. Cl.: H04L 12/24

(54) **PROCESS FOR AUTOMATIC EVENT REPORT REALIGNMENT IN A MANAGEMENT SYSTEM AND RELATED SYSTEM**
VERFAHREN UND VORRICHTUNG ZUR AUTOMATISCHEN AUSRICHTUNG VON EREIGNISBERICHTEN IN EINEM VERWALTUNGSSYSTEM
PROCEDE DE REALIGNEMENT AUTOMATIQUE DES RAPPORTS D'EVENEMENTS DANS UN SYSTEME DE GESTION ET DANS UN SYSTEME CONNEXE

(30) Priority: 23.12.1994 IT MI942634
(43) Date of publication of application: 08.10.1997
(73) Proprietor: Italtel s.p.a., 20154 Milano (IT)
(72) Inventor: CARRETTA, Tullio, I-31046 Oderzo (IT); PAULIN, Riccardo, I-20137 Milano (IT)
(74) Representative: Giustini, Delio
(86) International application number: EP9504849
(87) International publication number: WO9620547

(56) References cited:
- EP-A- 0 621 706
- US-A- 5 204 955
- A.V. AHO ET AL.: "Data Structures and Algorithms" 1983 , ADDISON-WESLEY PUBLISHING COMPANY , READING, MASSACHUSETTS, USA XP002001771 see page 56, paragraph 2.4 - page 61
- DATA COMMUNICATIONS, vol. 22, no. 17, 21 November 1993, page 53/54, 56, 58 XP000413734 JANDER M: "MIDLEVEL MANAGERS EASE SNMP INFORMATION OVERLOAD"
- IEEE COMMUNICATIONS MAGAZINE, vol. 31, no. 5, 1 May 1993, pages 20-29, XP000367615 YECHIAM YEMINI: "THE OSI NETWORK MANAGEMENT MODEL"

## Description

The present invention relates to the field of management systems and specifically to a realignment process for a copy of the state information reconstructed by a manager on the basis of 'events' transferred from a managed subsystem, with the actual state of the managed subsystem; the above mentioned events consisting of new values of variables defining the state.

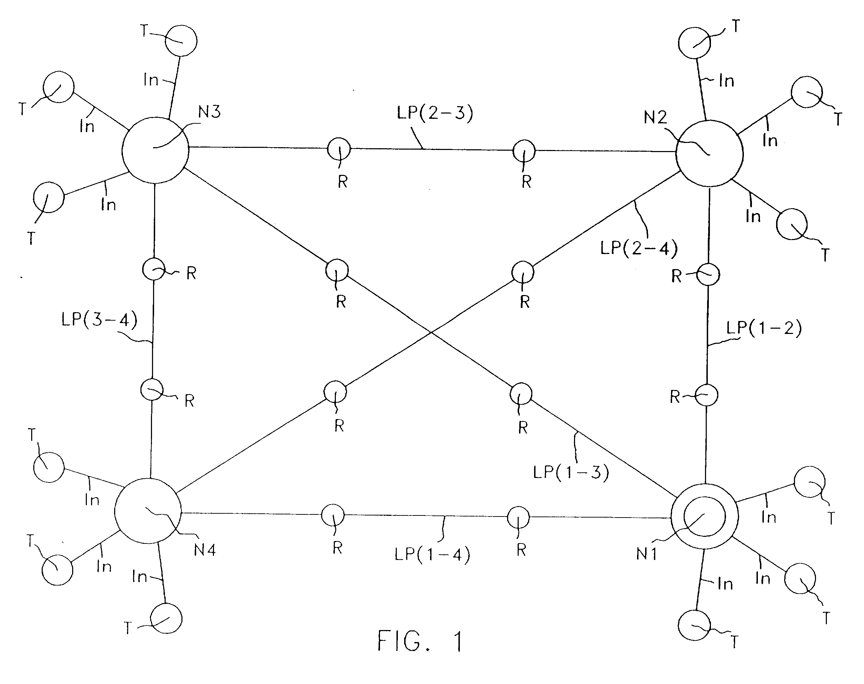

Managing a system means first of all performing all those functions allowing control of the operation of the system. In this sense FIG. 1 can serve as the basis for all subsequent considerations on the subject of management systems. FIG. 1 shows a telecommunications network made up of four nodes, namely N1, N2, N3 and N4, which are mutually interconnected by means of connecting lines indicated respectively by LP(1-2), LP(1-3), LP(1-4), LP(2-3), LP(2-4) and LP(3-4). For the sake of simplicity the directional arrows are not shown so that with the terminology used for the LP lines is meant the lines in both directions of transmission, e.g. LP(1-2) means LP(2-1) as well. Each node is also connected to three respective terminal points T by means of connection lines In. Along the path of the connection lines LP(1-2) to LP(3-4) can be seen some signal regenerators indicated by R.

The network of FIG. 1 can be without distinction either the telephone type or for data transfer or still another. The nodes N1 to N4 consequently comprise either telephone exchanges or node computers. In both cases they also include equipment for multiplexing/demultiplexing of the outgoing/incoming signals of the nodes, as well as the interfaces to the respective connection lines LP(1-2) to LP(3-4). These latter can be provided by means of radio bridge, optical fiber or wire sections. The topology of the network of FIG. 1 is such that the dialog between the terminal points T takes place only through one or more nodes N1 to N4 placed in a hierarchical order higher than T. As concerns the operations for network management, some activities, such as for example those which most concern operation of the individual pieces of equipment and control of the integrity of the connection lines, they are generally the responsibility of the processors located between the nodes, while those more properly for supervision of the entire network are preferably the responsibility of a single management processor located e.g. in the node N1. In performing its duties the latter is generally aided by local processors with which it forms a distributed intelligence system.

An important management function, which well exemplifies the supervision activity performed by the manager, consists of reconfiguration of the network in case of failure of one or more lines and in the resulting rerouting of the signals on the basis of the new configuration assumed.

In the case of FIG. 1 the management processor is located much more distant than the greater part of the equipment managed, while in other cases this may not be true. In practice there can occur different situations which go from a complete separation to a co-location. It is necessary to point out that, even in the case of co-location, generality is not taken from the invention described below.

As concerns the management activity from the systemistic viewpoint, it can be said that the network of FIG. 1 is a management system functionally divisible in a subsystem exercising management and a managed subsystem. The managing subsystem consists of the above mentioned processor located in the node N1 and possibly aided by the processors located in the remaining nodes. The managed subsystem consists of the entire network except the above mentioned processors. A basic premise for several management activities is acquisition by the manager of the operational state of the managed subsystem. The above mentioned state is definable as a set of variables indicating, for example, the presence of equipment failure alarms, the values of particular physical quantities, that of appropriate configuration parameters, the presence or absence of specific synchronization signals, any connecting line breaks, traffic values, service quality measurements, etc.

The previous diction, "operational state", is usually simplified with the single term "state" and the variables defining it are termed "state variables". It should also be specified that, for the purposes of a particular management function, the state considered does not necessarily coincide with the complete state, which is difficult to define, but rather with a subsystem of state variables which concern that function. These latter can be the discrete type, if they assume only a limited number of values, e.g. if they concern the presence or absence of alarms, or the analog type if they assume a continuous interval of values, such as e.g in the case of voltage measurement. Clearly the analog variables must be discretized.

In management system it is extremely important that every state change of the managed subsystem reach the manager in a timely manner, so that if irregularities are found it can send back messages capable of correcting the malfunctions.

From the foregoing it will be understood that a serious problem to be solved in the design of a management system is that of search for the best procedures in the transfer to the manager of the information on the state of the managed subsystem. Indeed, a mistaken choice of the above mentioned procedures could involve a loss of information due to congestion of the communication channels, saturation of the manager's processing capacity or both of these shortcomings, especially during periods of greater stress. The result is a worsening in management operations with the possibility of putting out of service significant parts of the managed subsystem.

The above mentioned problem is substantially a signaling problem, i.e. of orderly transfer of messages through the nodes of the network using therefor appropriate communications protocols defining the procedures of this transfer. These protocols have been for some time the subject matter of standardization by the international standardization agencies in the communications field (UIT, ISO, etc.) in order to allow compatibility between systems and equipment from different manufacturers.

A universally adopted model for definition of these protocols is that proposed by the International Standardization Organization (ISO) in document ISO 82 and known as model OSI (Open System Interconnection). As concerns communications activity the OSI model establishes an architecture on which to base that of open systems, i.e. those systems which can be interconnected with others while respecting predetermined standards. The OSI reference model is a structure organized in seven hierarchical functional levels whose combined purpose is to facilitate talk between interlocutors of the higher level (application). Each level N supplies services to level N+1 while making use of the services of level N-1. Within each level the dialog between interlocutors belonging to different open systems is controlled by the level protocol. The lower level is the physical one and handles electrical interface problems of the signals with the transmission means. The highest level is the application one and supplies to the users of this level, e.g. the application programs, all the resources they need to exchange messages with each other.

Performance of managerial functions makes use of a signaling activity consisting of messages exchanged between the users of the different OSI levels. Among these messages, those which most affect the present invention described below are those at application level whose information content includes information on the state of the managed subsystem.

For transfer of the above mentioned messages from the managed subsystem to the manager, the international recommendations on the subject , and further knowledge in the industry, indicate in particular two techniques and specifically the polling technique and the event report technique, as well as their numerous variants. Apart from the technique chosen, there is still the problem of reducing the high number of values coming from conversion to digital of the analog variables, which would uselessly load the communications channels. The latter problem is solved in a known manner by applying techniques such as that of report by change of state or by threshold passing.

The polling technique calls for periodic sampling by the manager of the value of all the state variables of the managed subsystem. It is thus a very simple technique to implement and is not affected by system overloads. On the other hand it generates toward the management processor a charge growing in proportion to the number of variables to be controlled, which makes it inapplicable in large systems.

The event report technique provides that for every event consisting of a new state variable value, the managed subsystem spontaneously sends to the manager a message including the above mentioned event. Starting from knowledge of an initial state, the manager updates the state variable values with the events received. This technique, as a result of sending only events rather than the entire state of the managed subsystem, is very advantageous in medium and large systems, i.e. when the number of variables controlled is on the order of thousands or tens of thousands.

The assumption on which the event report technique is based is perfect matching of the events generated with the events received from the manager. If this happens, the state of the managed subsystem, as reconstructed by the manager, is a perfect copy of the real one. If the assumption does not prove correct, and lacking appropriate measures, the state information reconstructed by the manager loses alignment with the actual state of the managed subsystem and thus becomes inconsistent therewith. This puts serious limitations on the correct continuation of the management activity. The causes which frustrate the above mentioned assumption can appear in particular during system activity peaks, where event generation speed can exceed the carrying capacity of the communications channels and/or the processing capacity of the management processor.

For the two above mentioned causes the greatest shortcoming introduced by the event report technique in a management system using it, is that of the possible inconsistency of the state information processed by the manager after an event peak.

Of the two techniques just discussed, only the event report technique is examined hereafter since the purpose of the present invention is mainly to remedy the principal shortcoming characterizing it. For the same purpose some measures which have been the subject of International Recommendations are known. One of the first of these is described in Recommendation CCITT X.740 and consists of putting into affect by the manager periodic checks, also term "audits" of the actual value of all the state variables of the managed subsystem.

The greatest disadvantage of performing the audits is that the manager is not enabled to know at what instant the information which has reached it begins losing consistency and, a very serious fact, it is no longer possible to recover the information on the inconsistency period.

A second measure, described in Recommendation CCITT X.735, provides use of a special recorder, located in the managed subsystem and termed hereafter 'LOG', to memorize sequentially all the events generated during a predetermined time period. Upon the expiry of predetermined time intervals the manager reads the content of the LOG and, if necessary, realigns its knowledge on the state of the managed subsystem with the actual state taken from the LOG.

The greatest disadvantage of using the LOG is that the manager could find itself in a state of inconsistency for a rather long time and in the worst case corresponding to the entire period between two successive LOG readings. As a result, for the entire duration of the inconsistency it would not correct the malfunctions of the managed subsystem. Furthermore, the interval between successive LOG readings being established with compromise criteria between different processing requirements, the duration of the inconsistency state would not be minimized as would be desirable.

Another disadvantage of using the LOG is the waste of resources by the management processor in rereading the LOG content and comparing the data read with that in its possession to identify the beginning of an inconsistency. Indeed, the greater part of the content is already known to the management processor, excepting the events lost during the inconsistency periods, which is the only useful information.

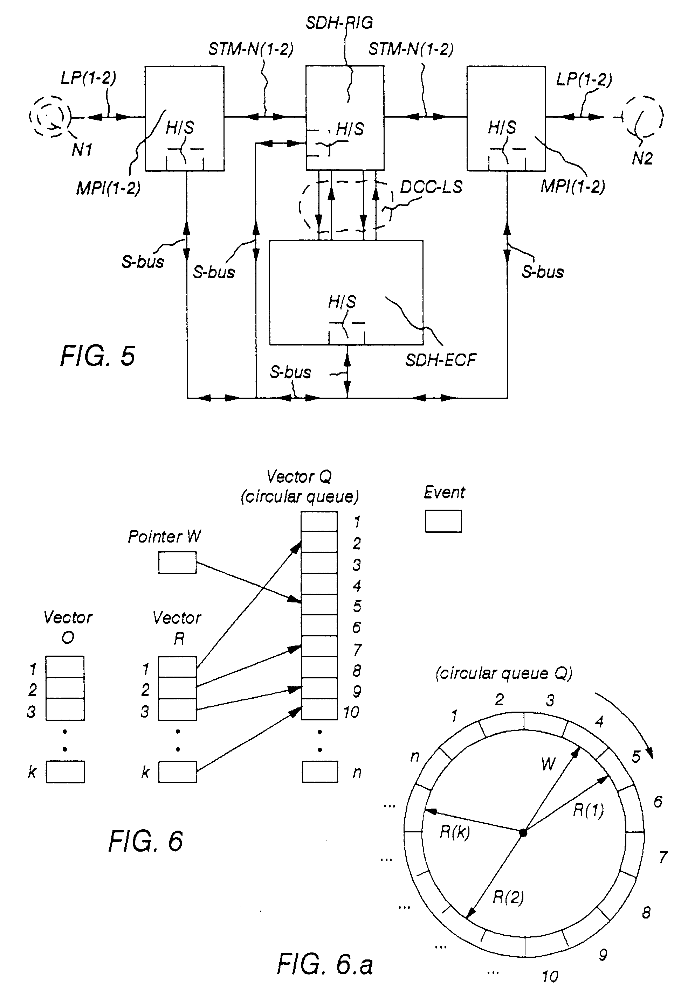

A state information realignment method similar to the above "LOG" operated method is disclosed in the EP-A-0 621 706 patent. Said method is carried out by a Network Manager for monitoring tables in which respective Agents collect individual records defining individual managed objects; each individual record having a unique index assigned thereto. Agents update the tables adding one record at every change in the state of a managed object, incrementing at the same time the respetive index of the record. The method, well depicted in the Fig. 6 of the citation, comprises an initial step in which the Manager requests one Agent to send an initial table and, after receiving it, stores the index of the most recently received record for each managed object, then the Manager periodically requests the Agent to send only the updating of a table. The disclosed method suffers the same drawbacks of the "LOG" technique of above. In fact, also in this case, the Manager doesn't have the knowledge of the misalignment istant, but it only checks a misalignment during the polling of an Agent's table, the misalignment being detected when an individual record index is larger than the respective stored one. Such a polling is generally scheduled on the basis of other Manager jobs, so it is reasonably slowered down just when its acceleration should be etter, such as during a peak of event production overloading the communication channels. During the time between two successive polling the Manager could more probably find itself in a state of inconsistency. From the above consideration follows that the method is better suitable for dealin with messages which don't require strong real time constraints, for example those generated in he Topology Database Updating (TDU), but it could reveal itself unacceptable with Event Report messages.

Accordingly the purpose of the present invention is to overcome the above mentioned shortcomings and indicate a process for realignment of a copy of the state information, reconstructed by a MANAGER on the basis of an initial state and of events little by little transferred from a managed subsystem, with the actual state of the managed subsystem.

To achieve this purpose the present invention has for its subject matter a procedure for realignment of a copy of the state information of a managed subsystem reconstructed by a MANAGER, with the actual state of said managed subsystem. Reconstruction of the state information is performed on the basis of an initial state and of events, consisting of new values of the state variables, which the managed subsystem takes and little by little returns to the manager. The events are written in a buffer of the events, organized like a circular queue, in which the managed subsystem writes the events, reads them asynchronously in comparison with the writing and transfers them to the manager. Loss of alignment is signaled by an overflow condition of the circular queue, ascertained after every writing in the queue. The realignment is accomplished by the managed subsystem which sends to the manager its own state at the time of the loss of alignment, which is followed by the sending of any new events written in queue in the meanwhile, as better described in claims 1 to 11.

Another subject matter of the present invention is a management system using the procedure described in claim 1, as set forth in claims 12 to 19.

In view of the foregoing the fundamental difference between the known realignment procedures and the procedure in accordance with the present invention is that in the former it was the manager which noticed the misalignment by off-line reading of the LOG, while in the latter it is the managed subsystem which notices it upon event memorization in the circular queue and brings about all those activities which lead to realignment of its own MANAGER.

This is a great advantage because the misalignment is detected from its first appearance and this allows automatically starting the realignment operations. These operations consist of sending to the manager the state information which it is no longer capable of reconstructing because of the loss of the remote events by overwriting in the circular queue by more recent events. The latter are also sent to the manager, completing the preceding information, after which new event readings in the queue continue.

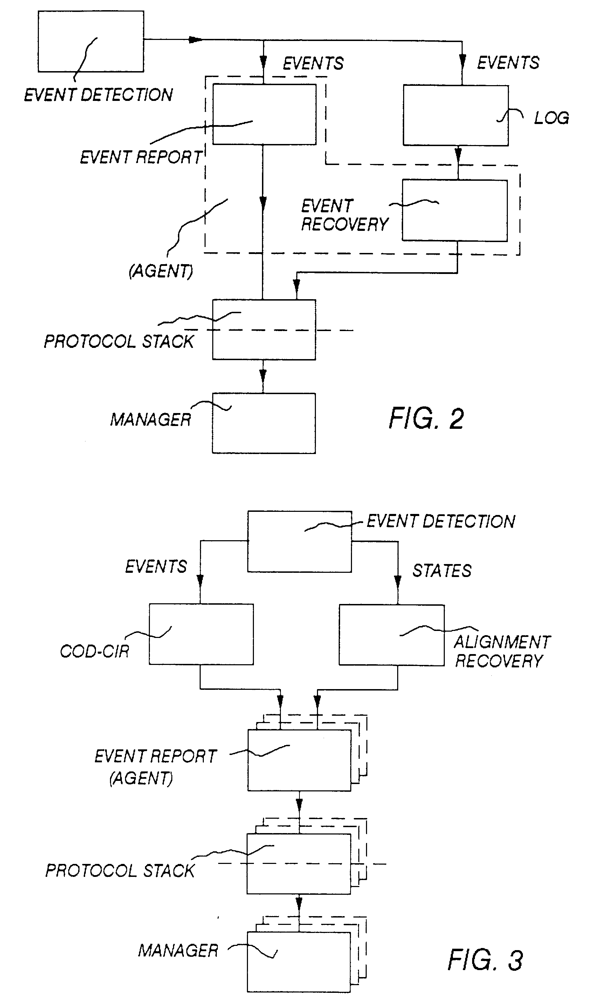

The advantages possessed by the procedure which is the subject matter of the present invention and the additional innovations introduced in comparison with the known procedures are better understood with the aid of FIGS. 2 and 3 in which:

FIG. 2 shows a set of functional blocks diagramming the event report and realignment operations in accordance with the prior art, and

FIG. 3 shows a set of functional blocks diagramming the event report and realignment operations in accordance with the present invention, and of which greater details are supplied with the discussion of FIGS. 6, 6.a, 7, 8, 9, 10 and 11.

The diagram of FIG. 2 is not the only one possible in relation to the prior art but it represents it exhaustively and is suited to immediate comparison with FIG. 3. More detailed diagrams can be obtained from CCITT Recommendations X.734 and X.735 and from the document entitled "Application Services: Event, Configuration, and Alarm Management", Forum 002, edition 1.3, August 1991, published by OSI/Network Management Forum. From the above mentioned documents it is seen that the communications protocols used in the dialog between the manager and the managed subsystem include applications which use a new software technology termed "object oriented". This technology was formalized by means of an abstract notation going under the name "informative model" and aiming to describe the different physical elements of a network by means of logical attributes assigned thereto for the purpose of facilitating and standardizing the management of equipment coming from different producers. The above mentioned formalization is contained in document ASN.1 (Abstract Syntax Notation One) or, in an equivalent manner, in CCITT Recommendations X.208 and X.722 "Guidelines to the definition of managed objects" (GDMO). Complementary to the "objects" paradigm is a structurization of the software in modules termed "MANAGER" and "AGENT, according to which the manager does not perform its management functions independently but supplies directives to one or more AGENTs for the performance of some partial duties.

Subject to the foregoing premises FIG. 2 shows blocks denominated EVENT DETECTION, EVENT REPORT, LOG, EVENT RECOVERY, PROTOCOL STACK and MANAGER. The lines which join the various blocks indicate by means of arrows the main flow direction of information between the blocks. Each block represents a functional module provided by a special set of programs, with partial exception of the LOG block which also indicates a memory for event recording. In FIG. 2 the blocks EVENT DETECTION, EVENT REPORT, EVENT RECOVERY and the LOG block are operating in the managed subsystem. The block PROTOCOL STACK is ideally split into two halves of which one belongs to the managed subsystem and the other to the manager. The block MANAGER represents both a management processor and the program modules which govern it in performance of all the management functions expected for supervision of the managed subsystem, in particular checking of malfunctions, monitoring of services and "historical" memorization of related data (LOG).

In performance of the above mentioned functions the MANAGER module acts as a MANAGER which sends directives to AGENTs. In this case the directives consist of requesting an event report service or a recorded events report recovery service to be put in effect in accordance with appropriate performance procedures. In this context the EVENT REPORT and EVENT RECOVERY modules belong to a single AGENT which supplies to the module MANAGER the services of the same names. The talk between the MANAGER module and the AGENT modules takes place through the PROTOCOL STACK module which performs all the functions called for in the standard communications protocols used there. The EVENT REPORT and EVENT RECOVERY modules in turn request from the EVENT DETECTION and LOG modules the events to be transferred to the MANAGER module.

The EVENT DETECTION module in the diagram of FIG. 2 cyclically reads the value of each state variable (polling) and compares the reading just done with the previous value of the same variable present in a memory of the states. If in the comparison there has been no coincidence the module itself induces the following actions: a) updating of the states memory with the new variable value, b) generating an event which consists of the information elements necessary for the manager to update its own copy of the managed subsystem state, i.e. the identifier of the type of state variable which generated the event, and the new value thereof, c) making available to the EVENT REPORT (AGENT) module the event just detected for transfer to the MANAGER module and simultaneous recording thereof in the LOG.

The EVENT REPORT (AGENT) module is instructed in advance by the MANAGER module the report procedure to be applied and the type of events to report. Among the different possible report procedures most likely to cause misalignments is without doubt the independent, i.e. spontaneous, report of events of particular importance, e.g. the onset of alarms, which must be reported to the manager as quickly as possible after their appearance to avoid serious faults in the system. Other report procedures such as e.g. automatic periodic report or report on request are not as detrimental for alignment purposes.

The EVENT REPORT (AGENT) module, once initialized, remains on standby to receive an event from the EVENT DETECTION module, after which it starts recording of the new event in the LOG and simultaneously sends the event to the MANAGER module while using for the purpose a specific service of the communications protocol present in the PROTOCOL STACK module. It is useful to point out that, in this step, loss of alignment mentioned in the introduction could occur. Indeed, apart from the particular sophistication of the possible protocols used, it is still true that during peaks of activity of the system the resources available to the services offered by any known protocol are not always sufficient to avoid loss of events by the manager, at least as concerns their on-line acquisition.

The LOG block diagrams the recorder of events mentioned in the introduction and is located inside the managed subsystem. In LOG the events are recorded observing the chronological order in which they are detected by the EVENT DETECTION module. The size of the LOG memory area depends on the dimensions of the managed subsystem and the maximum duration of the observation period. Upon expiry of the predetermined times the content of the LOG is read by the MANAGER module through the EVENT DETECTION (AGENT) and PROTOCOL STACK modules. The MANAGER module, processing the content of the LOG off line, recovers the events lost during on-line processing and realigns the copy in its possession about the state information of the managed subsystem with the actual state thereof at the time of the LOG reading.

The diagram of FIG. 3 differs from that of FIG. 2 mainly by the fact that the event information flow generated by the EVENT DETECTION module no longer reaches the EVENT REPORT (AGENT) module directly but through a block COD-CIR. There is also present a ALIGNMENT RECOVERY module while the LOG block and the EVENT RECOVERY (AGENT) module are missing. It is significant that the EVENT REPORT (AGENT) module is not limited to the event report, as happened for the block of the same name of FIG. 2, but induces all those actions which take the manager to realignment. It thereby gives great novelty and originality to the process in accordance with the present invention, distinguishing it from the prior art in which it was the MANAGER module which carried out the realignment procedure.

In FIG. 3 it can be seen that the MANAGER, PROTOCOL STACK and EVENT REPORT (AGENT) blocks are multiplexed and this corresponds to a possible situation in which there are multiple MANAGERs, each served by a respective AGENT, which need to acquire the events.
In operation, referring for greater details to FIGS. 6, 6.a, 7, 8, 9, 10 and 11, the EVENT DETECTION module detects the events as it did in the module of the same name in FIG. 2 but differs therefrom by the fact that it does not make the event just detected available to the EVENT DETECTION (AGENT) module but transfers it directly to the block COD-CIR.

The block COD-CIR is a program module which manages both the writing and the reading of the events in an event buffer present in the managed subsystem. This buffer is indispensable to obviate the loss of state information which, in its absence, could take place when it is not possible to synchronize consumption of the events with their production, similarly to what took place in the cases mentioned in the discussion of FIG. 2. In these cases the event buffer becomes the place where the events occurring are accumulated while waiting to be withdrawn. The event buffer managed both in writing and reading by COD-CIR, because of the limited memory available, functions as a circular queue written by EVENT DETECTION and read by EVENT REPORT (AGENT).

As known, a method for managing a sequential memory of N data as a circular queue is to use respective pointers both in reading and writing and increase a pointer by one unit, module N, upon every single reading or writing operation. In this manner, after writing of N data the following data will be written over the oldest. It may happen that, in cases of particular activity in the production of events, the peak gives rise to an overflow of the event buffer with loss of the remotest events, especially if the latter has not be correctly sized. The COD-CIR, EVENT REPORT (AGENT) and ALIGNMENT RECOVERY modules provide that this fact does not cause permanent loss of the state information by the MANAGER.

The COD-CIR module comprises two sections independent from each other and which handle the writing in the event buffer and reading thereof respectively.

The section which handles writing is constantly in wait to receive an event from EVENT DETECTION and, as soon as it receives it, it writes it in the event buffer, and in this step it notices whether the writing produces an overflow of the buffer in relation to each of (m) reading processes of the active queue in as many AGENTs, with loss of the remotest event overwritten. In affirmative cases, each overflow condition is memorized in a special overflow vector, but the writing in queue cannot be stopped on pain of loss of events for the reading processes for which the queue is not overflowing. This means that, upon each new writing in queue, the reading processes for which the queue is overflowing lose the remotest residual event.

The COD-CIR section which handles reading reads the event buffer for the (m) AGENTs which request it. Given the temporal randomness of the read request, the queue readings are performed by COD-CIR independently of each other and independently, i.e. asynchronously and not deterministically, of the queue writings. In view of the above, the reading section of COD-CIR is constantly in wait to receive a queue reading order from an AGENT (m) and as soon as the order is received it completes the following actions:
a) it checks whether overflow was signaled for the reading process of the AGENT (m),
b) if in a) there was no overflow it checks if the queue is empty,
c) if in b) the queue is empty it so informs the AGENT (m),
d) if in b) the queue is not empty, depending on the directive received it reads one or more or all the queued events and transfers them to the AGENT (m) which requested them for use thereof in the manner it knows, and
e) if in a) there was overflow the reading section of COD-CIR so informs the AGENT (m) which had asked it to read, and then stands by to receive therefrom a reading order. As soon as the order arrives the reading section cancels the overflow condition and resumes reading, starting from any events written in queue during the realignment operation, which it transfers to the AGENT (m).

One of the main AGENTs which needs to read the queue and is also the one most involved in the present invention is the EVENT REPORT module. In each of the EVENT REPORT (AGENT) modules multiplexed in FIG. 3 a reading process for which the overflow condition could occur is active. If there is no overflow, the generic EVENT REPORT (AGENT) module takes the oldest event or events in the queue read by COD-CIR and transfers them to the PROTOCOL STACK module for forwarding to the MANAGER module. If there is overflow it orders the ALIGNMENT RECOVERY module to perform a temporary copy (photograph) of the updated state of the managed subsystem and to send said copy to it, after which it transfers it to the PROTOCOL STACK module for forwarding to the respective MANAGER module. In this manner the loss of events is compensated by sending of the state, and the residual events written in the queue before the photograph of the state lose interest. At the end of the transfer of the state copy the EVENT REPORT (AGENT) module orders the COD-CIR module to read all the events, if any, written at the same time in the event buffer. Upon reception of said events it transfers them to the PROTOCOL STACK module.

Transfer of the state copy to the MANAGER can be studied so as to optimize the transmission channel. A first method is certainly to predetermine for each system variable a preset value, also termed 'default', and to send only those state variable values different from the respective default values, already known from the MANAGER module. A second method, more onerous than the first, is to send all the state variable values. In either case the values to be sent can be sent individually or grouped.

It is theoretically possible, although highly improbably, that the event buffer will overflow again during a realignment operation but the procedure just discussed can be reiterated to recover alignment in this situation, too.

The ALIGNMENT RECOVERY module is always waiting to receive from the EVENT REPORT (AGENT) module an enablement command. As soon as it does and before photographing the state memory it advises the COD-CIR module to block any writing in the event buffer while the photography is taking place. This block is of brief duration because the photograph is performed very fast and therefore could very hardly cause loss of events by the reading processes for which the queue is not overflowing.

As concerns the PROTOCOL STACK module, differently from the other modules of FIG. 3, no further figures are necessary to better explain the above remarks since, to support the innovations introduced with the modules of FIG. 3, it suffices to use appropriate and innovatively the report services already called for in the communications protocols of the specifications mentioned. These remarks are very important because they make clear the fact that the realignment procedure which is the subject matter of the present invention can be realized today while remaining compatible with existing standards. Indeed, it suffices to include in the data sent to a manager by means of EVENT REPORT (AGENT) the additional information to say that the sent corresponds to a value of a state variable identified by its own identifier. This is in conformity with the applicable protocols, which already call for transfer to the manager of the initial state variable values as a necessary condition for all subsequent event report activity. The innovation introduced, only as regards use of the report services supplied by the protocols, is that the state information is reported not only in the management system initialization step but immediately after each loss of alignment of the state information in the manager's possession.

The PROTOCOL STACK module of FIG. 3 must not disturb the realignment procedure which is the subject matter of the present invention, so it must therefore obligatorily ensure sequential ordering of the messages transferred and the delivery of all the messages received, i.e. it must not admit the possibility of losing any received message, for which it should request retransmission.

The use of a circular queue to release the event producer from the on-line consumer introduces another advantage owing to the fact that, by appropriately sizing the queue, it is possible to absorb system activity peaks almost without using realignment.

A second advantage is the capability of using a single memorization area with a single event producer and many consumers. This becomes useful in those cases where the same information must be routed to different users, e.g. personal computers, printers, other peripherals, etc.. In this manner there is saving of space occupied by the circular queue since all the users use the same information and process it in accordance with their own timings.

For reasons of convenience the COD-CIR block could also include the historical memorization services typical of the LOG block of FIG. 2. In effect there is a certain similarity between the two blocks, i.e. the LOG can be provided as a circular queue. In the hypothetical case the EVENT REPORT (AGENT) module must also take over the functions of the EVENT RECOVERY (AGENT) module of FIG. 2. The implementation procedures just mentioned would allow the manager to remain inactive for a certain time without losing alignment for this reason. Alternatively, the LOG could still be provided independently of the event buffer but in this case it would be used in operations different from realignment, e.g. generation of periodical printings.

Further purposes and advantages of the present invention are clarified in the detailed description of an embodiment thereof given below by way of nonlimiting example with reference to the annexed drawings wherein:

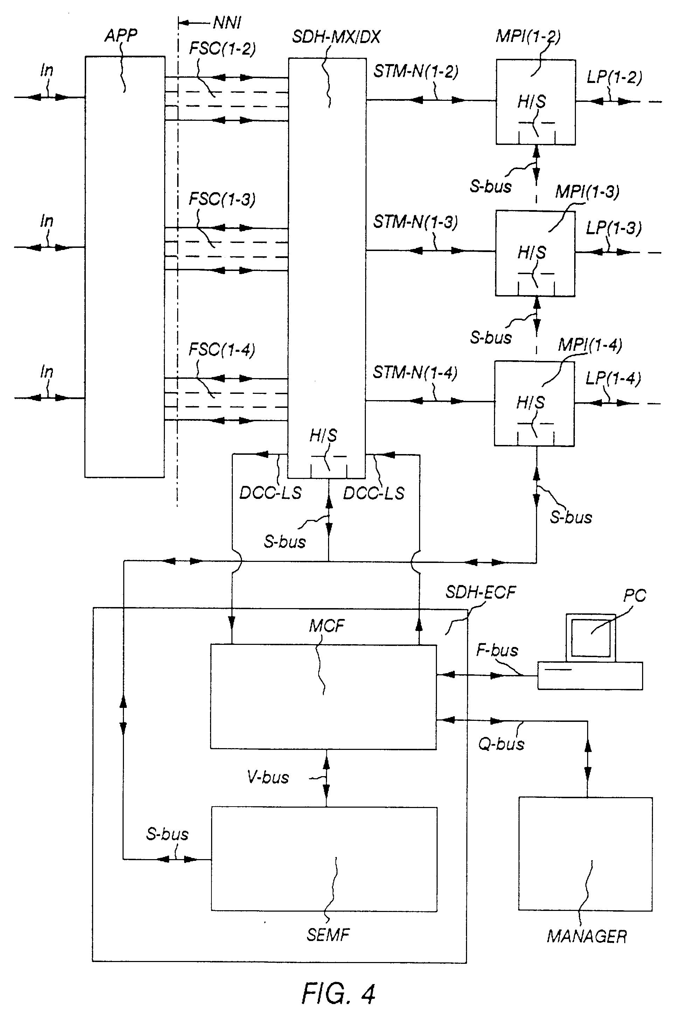

FIG. 4 shows a block diagram of an embodiment of a node N1 of FIG. 1 in the case where the network shown is a telephone network,
FIG. 5 shows a block diagram of an embodiment of a block R of FIG. 1 located along the connection line LP(1-2),
FIGS. 6.a and 6 show respectively a data structure organized as a circular queue and the means which allow management thereof, and

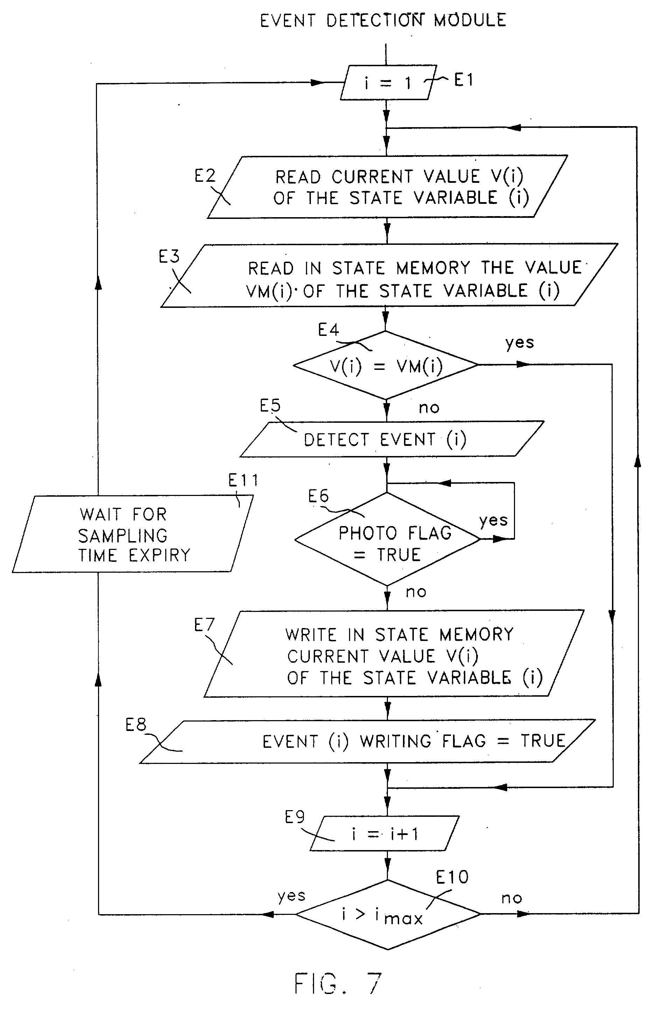

FIGS. 7, 8, 9, 10 and 11 show flow charts for the program modules of FIG. 3.

With reference to FIG. 4, where the elements common to FIG. 1 are indicated by the same symbols, we see a block APP representing a telephone exchange connected at the terminal points T (FIG. 1) by means of the connection lines In. In the case shown the terminal points T are, e.g., local branch exchanges, the lines In are 2-wire telephone lines, and the telephone exchange APP a district exchange.

The exchange APP is also connected to a synchronous time-division multiplexing/demultiplexing block SDH-MX/DX by means of respective groups of serial lines indicated by Fsc(1-2), Fsc(1-3) and Fsc(1-4). The block SDH-MX/DX is in turn connected, through respective pluralities of serial lines STM-N(1-2), STM-N(1-3) and STM-N(1-4), to respective interface blocks MPI(1-2), MPI(1-3) and MPI(1-4) toward the transmission means consisting of the lines LP(1-2), LP(1-3) and LP(1-4), which connect the node N1 respectively to the nodes N2, N3 and N4 (FIG. 1).

FIG. 4 also shows a block SDH-ECF which includes a block SEMF and a block MCF. The block SEMF is connected to the block MCF by means of a bus indicated by V-bus and to the blocks SDH-MX/DX, MPI(1-2), MPI(1-3) and MPI(1-4) by means of a bus indicated by S-bus, which in the blocks indicated is connected to as many sub-blocks H/S. The block MCF is also connected to the block SDH-MX/DX by means of serial connection lines indicated by DCC-LS, to the MANAGER block by means of a bus Q-bus, and to a personal computer PC by means of a bus F-bus.

The circuit diagram of FIG. 4 for the node N1 is identical to that of nodes N2, N3 and N4 (FIG. 1) except for congruent changes in the symbols indicating the different elements, with the only recognizable differences being in the functions of the blocks SEMF and MCF.

The circuit diagram of FIG. 5 refers to any one of the three regenerators R of FIG. 1 located along the connection line LP(1-2). In this case also the above mentioned diagram is identical to that of the other regenerators R of the network excepting congruent changes in the symbols indicating the different elements.

With reference to FIG. 5, in which the elements common to FIGS. 1 and 4 are indicated by the same symbols, there are seen the block SDH-ECF, two identical blocks MPI(1-2) and a block SDH-RIG. The block SDH-ECF is connected to the remaining blocks by means of the bus S-bus and again to the block SDH-RIG by means of the serial connection lines DCC-LS. The block SDH-RIG is also connected to the blocks MPI(1-2) by means of respective pluralities of serial lines STM-N(1-2) of the same kind as those of FIG. 4. In turn the blocks MPI(1-2) are connected by means of connection lines LP(1-2), which represent the transmission means, or to two regenerators R (FIG. 1) or to a regenerator R and to one or the other of the nodes N1 and N2.

It is pointed out that the double arrows used in FIGS. 4 and 5 to indicated the 2-way nature of the signals on the lines In, LP, STM-N and the groups FSC apply only for the 2-wire telephone lines In, while in the other cases it is understood that the transmission and reception signals travel on different lines. Furthermore, as mentioned above for the lines LP, the terminology used to indicate the groups FSC and the lines STM-N indicates, for the sake of simplicity, groups and lines in both connection directions. The same remarks apply for S-bus, Q-bus and F-bus which are serial busses for full duplex data transmission, but not for V-bus which is a microprocessor bus whose direction depends on whether the operation under way is reading or writing. Concerning the terminology used to indicate the MPI blocks, which are in reality divisible in two parts each connected to the lines LP and STM-N for reception or transmission, the same simplification used to indicate the lines LP and STM-N applies.

As regards operation of the blocks of FIGS. 4 and 5 it is noted that the present invention is essentially contained in the block SEMF (FIG. 4) and specifically in the program governing operation of a microprocessor included therein. All the other blocks of FIGS. 4 and 5, just as the circuitry and a large part of the functions of the block SEMF, refer to the prior art already amply described in the CCITT Recommendations mentioned below in relation to a non-limiting embodiment of the present invention in accordance with the dictates of the so-called Synchronous Digital Hierarchy known by the symbol SDH.

Accordingly a detailed description of the above mentioned blocks would be superfluous but will be given in essentially functional terms after a brief introduction to SDH systems. The latter are discussed in the framework of international standards applicable to telecommunications management networks, known under the symbol TMN (Telecommunications Management Network) and essentially described in CCITT Recommendation "Principles for a telecommunications management network (TMN)", Vol. IV, Rec. M.30. A TMN is a management network controlling a telecommunications network, and often using the latter to exchange management messages between the different points of the network in a manner consistent with the "object oriented" philosophy.

SDH systems assume great significance in the framework of TMNs because they supply to the telecommunications network of which they are part a standard set of digital transport structures capable of transporting a large amount of "paying" information with which is associated the additional information for detailed management of the telecommunications network itself. Of basic importance is also the fact that SDH systems allow dynamic management of the internal structure of the message flows, thereby making routing of the payload in the network flexible. The message to be transported is made suitable for serial transmission on the selected transmission means and is synchronized with the network clock. As concerns the payload, it usually consists of signals generated by the digital multiplexes belonging to those specified in CCITT Recommendation G.702, or of asynchronous transport modules known also by the symbol ATM (Asynchronous Transport Module) or some other.

SDH systems are based on the use of Synchronous Transport Modules (STM). An STM consists of fields related to the payload and fields related to a Section Overhead (SOH) organized hierarchically in a bit block frame structure repeated every 125 µs. Physically, a basic STM module appears as a string of bits with 155,520 kbit/s and is termed STM-1. STM-N modules of greater informative capacity are obtained by utilizing bit frequencies which are multiples of a value N in relation to that of STM-1. The values of N admitted by the SDH specifications are N=4 and N=16, giving rise to bit strings of 622,080 kbit/s and 2,488,320 kbit/s.

In an STM-N module the payload is included in informative structures denominated Virtual Containers (VC) used as support for routing the load within the network. Virtual Containers comprise fields for the payload and fields for a path overhead (POH) organized in a block frame structure repeated every 125 or 500 µs. The POH provides for the integrity of the communication between the assembly point of a VC and its disassembly point. The basic elements for assembly of the VCs and those which are the result of the complete disassembly are termed C-n containers with n = 1 to 4. A container is a structure constituting the synchronous network information for the payload of a VC. To facilitate synchronization of the payload with the network the CCITT has defined special adaptation functions for the main standardized flows at the most common network frequencies within a limited number of standard containers.

In an STM-N frame the initial position of each individual component block is identified by a system of pointers in which the value of the pointer associated with a generic block indicates the shifting of the initial point of that block in relation to its transport structure reference frame.

From the above remarks it can be understood how the payload routing mechanism within an SDH network consists of the fact that at the interface points with the network nodes it is possible to disassemble the STM-Ns in component blocks from which are extracted flows directed in desired directions and, dually, it is possible to insert a payload within an STM-N directed in one direction rather than another. It is also possible to route a load by multiplexing two STM-N modules in a single STM-M module of greater capacity or transferring the load from a first STM-N to a second of the same capacity. The above mentioned assembly and disassembly operations generally involve resulting time division multiplexing and demultiplexing operations of the various blocks making up the STM-Ns.

The information necessary for dynamic control of the above mentioned routing operations, as well as that necessary for performance of the main network management functions, travels over data communication channeis made in the SOH of the STM-Ns, which also comprises the information for maintaining the synchronizing of the STM-N frames at the various points of the network. Functionally, the SOH is divisible in two suboverheads termed Regenerator Section Overhead (RSOH) and Multiplex Section Overhead (MSOH), distinguishing between the two possible connection types within the network of FIG. 1. The information contained in the RSOH is accessible both to the regenerators and the SDH multiplexes while that contained in the MSOH is accessible only to the multiplexes and therefore passes unaffected through the regenerators. The suboverheads RSOH and MSOH are divisible in diversely named bytes with which are associated very precise functions among which is data communication. For the latter purpose, in the RSOH there are used 3xN bytes to supply N 2-way 192 kbit/s data channels directed to the alarm, maintenance, control, monitoring and administration messages, and additional communications requirements between two sections processing the RSOH. In the MSOH are used 9xN bytes to supply N 576 kbit/s 2-way data channels (not accessible to the regenerators) for purposes similar to those of the RSOH. The above mentioned channels are indicated by the symbol DCC (Data Communication Channel) and in particular DCCR or DCCM if coming from RSOH or MSOH respectively. They constitute the physical level for support of logical control channels termed Embedded Control Channel (ECC) for data communication within the SDH network.

It remains to discuss the aspects more properly related to control of the equipments and the access to the network of FIG. 1 by a MANAGER belonging to the SDH network or, more generally, to a TMN including the SDH.

According to the rules of logic, control and access are two aspects not completely separable from each other. As concerns control, a distinction must be made between equipment which as a whole make up the Synchronous Digital Hierarchy (SDH), as e.g. the SDH-MX/DX and MPI blocks of FIG. 4, and not strictly SDH equipment such as e.g. the telephone exchange APP. In the former case control is exercised by the MANAGER by means of a function going under the name Synchronous Equipment Management Function (SEMF). In the latter case the MANAGER does not make use of the SEMF. In both cases however the MANAGER accedes to the equipment by making use of a function going under the name Message Communication Function (MCF). Both functions are diagrammed in the CCITT specifications with blocks of the same names and corresponding to the respective blocks indicated in FIG. 4 of the non-limiting example. The MCF calls for use of different interface types of which a first, toward the SDH multiplex, is supplied by the DCCs; a second, toward the TMN, is shown in the CCITT Recommendations for the Q interface; a third, toward a local personal computer, denominated interface F in the set of the CCITT Recommendations for the SDH, is still not specified; and a fourth, toward the SEMF block, is termed interface V below.

For the SEMF block to exercise the control functions, there are provided reference points Sn in each functional block of the set which in FIG. 2-1 G.783 of CCITT Recommendation G.783 describes an SDH system functionally. At the reference points Sn arrive the appropriately reprocessed commands which the MANAGER sends to the SDH equipment, or the operational state information which the SDH equipment makes available there in a very concise form. This information concerns e.g. the circuit configuration of the equipment, the operating irregularities, any failures, alarms or other specific information requested by the MANAGER. The reference points Sn can be seen as interface points between the hardware and the software, keeping a certain analogy with the 'sense and control points' universally used in control of hardware by means of microprocessors. The information and the commands travel on a serial bus termed S-bus which connects the SEMF block to respective interfaces with the reference points Sn in the various pieces of equipment to implement a point/multipoint connection.

Thereupon the SEMF block converts the information received from the equipment through S-bus in object oriented messages, which it sends to the MCF block for transmission to the MANAGER through the appropriate interfaces. It also converts object oriented messages coming from the MANAGER through MCF into a form suited for transfer to the equipment through the reference points Sn.

The MCF block receives and queues messages coming from the SEMF block and the DCC, Q and F interfaces. The messages not addressed locally are transferred to one or more outgoing DCCs in accordanace with the local routing procedures and/or those of the interfaces Q. In conclusion, the MCF block makes the physical level protocols compatible with the various interfaces and thereby offers to a TMN a way of 'logical' connection with any SDH equipment through a single interface Q and interconnecting DCCs.

A number of CCITT Recommendations which broaden the previous information and describe in great detail the SDHs concerning their circuitry organization, the functions carried out by the individual circuits, interfacing, management aspects and still more are listed below.
(a) G.707, G.708 and G.709 form a coherent set of specifications for the Synchronous Digital Hierarchy (SDH) and the network node interface(NNI),
(b) G.781 supplies the structure of the Recommendations on multiplexing equipment for the Synchronous Digital Hierarchies (SDH),
(c) G.782 describes the types and general characteristics of the SDH multiplexing equipment,
(d) G.783 specifies the characteristics of the functional blocks of the SDH multiplexing equipment,
(e) G.958 specifies the digital line systems based on SDH for use with optical fiber cables,
(f) G.773 defines the protocol followed for the Q interfaces,
(g) G.784 defines the management aspects of the Synchronous Digital Hierarchy (SDH), and
(h) G.774 defines the informative model which concerns the Synchronous Digital Hierarchy (SDH).

The subjects discussed above concerning SDHs, together with the content of the Recommendations referenced, now make more understandable operation of the blocks of FIGS. 4 and 5 which diagram respectively a node of network N1 and a regenerator R based on SDH.

Accordingly, with reference to FIG. 4, the exchange APP is an automatic telephone switch which completes routing of the originated or terminated voice call signals. For calls different from those originated and at the same time terminated in local exchanges T connected to the node N1 (FIG. 1) the exchange APP includes time division multiplexer/demultiplexers (not shown in FIG. 4) which multiplex telephone channels outgoing from APP within serial frames of outgoing lines which are part of respective groups Fsc(1-2), Fsc(1-3) and Fsc(1-4) and demultiplex serial frames of entering lines belonging to the same groups to obtain telephone channels which the exchange APP routes to the lines In.

The multiplexer/demultiplexers of APP are tributaries of the SDH-MX/DX block, which carries out all the functions of the multiplexing/demultiplexing equipment of an SDH system. The signals pertaining to the above mentioned tributaries are strings of bits with e.g. the following possible bit frequencies: 1,544, 2,048, 6,312, 8,448, 34,368, 44,736 and 139,246 kbit/s and comprise groups of 64 kbit/s Pulse Code Modulation (PCM) channels arranged within plesiochronous primary frames which are in turn multiplexed within frames belonging to hierarchical levels little by little increasing in accordance with the provisions of CCITT Recommendations G.702. As regards the electrical characteristics of the G.702 signals present at the NNI interface of FIG. 4, they are defined in CCITT Recommendations G.703. Recalling the remarks made above on SDH systems, the SDH-MX/DX block synchronizes with the network clock the plesiochronous flows coming from the lines of the groups Fsc(1-2), Fsc(1-3) and Fsc(1-4) and then assembles the STMs belonging to the pluralities of serial lines STM-N(1-2), STM-N(1-3) and STM-N(1-4) outgoing from the node N1. The same block disassembles the STMs belonging to the plurality of serial lines STM-N(1-2), STM-N(1-3) and STM-N(1-4) entering the node N1 and desynchronizes the flows included in the containers C-n and sends them to the lines of the groups Fsc(1-2), Fsc(1-3) and Fsc(1-4). The SDH-MX/DX block operates in such a manner that in case of normal traffic along all the directions branching from the node N1 there is correspondence between the traffic on the group Fsc(1-2) and that on the plurality STM-N(1-2). This also applies for Fsc(1-3) with STM-N(1-3) and for Fsc(1-4) with STM-N(1-4) while in case of excessive traffic along a particular direction, part of the traffic on a group can be diverted along a direction different from that previously indicated.

Within each plurality of serial lines STM-N(1-2), STM-N(1-3) and STM-N(1-4) are provided, for reasons of safety, one or more reserve lines on which is switched the traffic of one or more operating lines which have interruptions due to failures or excessive signal fading.

The SDH-MX/DX block includes all the circuits necessary for completing on the signals the line interfacing, scrambling/descrambling and multiplexing/demultiplexing operations typical of the SDHs, as specified in the above mentioned CCITT Recommendations. It also includes a clock signal generator and appropriate synchronizing signals which supply the timings required for correct operation of the different blocks.

The MPI(1-2), MPI(1-3) and MPI(1-4) blocks receive the signals present on the lines belonging respectively to the pluralities STM-N(1-2), STM-N(1-3) and STM-N(1-4) outgoing from the SDH-MX/DX block and carry out all those operations usually required for transmission of these signals by making use of the transmission means represented by the lines LP(1-2), LP(1-3) and LP(1-4). These blocks also carry out the dual operations which start from reception of the signals present on the lines LP(1-2), LP(1-3) and LP(1-4) and lead to obtaining STM-N modules to be accomodated on respective lines of the pluralities STM-N(1-2), STM-N(1-3) and STM-N(1-4) entering the SDH-MX/DX block.

In the example shown the lines LP(1-2), LP(1-3) and LP(1-4) represent sections of a microwave radio link connection in which the radio channels are assigned in conformity with an international frequency assignment plan providing for spacing of 28, 30 or 40 MHz between modulated carriers transmitted with alternating cross polarization, as better explained in CCIR Recommendations on the matter. A problem which arises in observing this plan is that of identifying an appropriate digital signal modulation diagram which would allow the best accommodation of the STM-N digital modules within the bands assigned to the channels. In the MPI blocks of FIGS. 4 and 5 a Trellis Coding modulation diagram joining a Viterbi decoder in reception has been used. The high spectral efficiency achieved in this manner has made possible conveying two 155,520 kbit/s STM-1 modules in a 40 MHz band width channel.

The restrictions placed on radio channel band width by the CCIR frequency sharing plan does non exist for optical fiber transmission, where the entire digital signal base band is used. Since the example shown is given in a non-limiting sense it is possible to provide the lines LP(1-2), LP(1-3) and LP(1-4) in optical fibers and thus transmit 622 Mbit/s STM-4 modules and 2.5 Gbit/s STM-16 modules. In this case operation of the MPI blocks must be in conformity with CCITT Recommendation G.958 which specifies the SDH-based digital line systems using optical fiber cables.

Thus, and considering only the case of radio link connections, the operations carried out in transmission on the 1xSTM-1 or 2xSTM-1 digital signals are essentially: coding the signals, M-QAM or M-QAM-based digital modulation (with Trellis Coding the two steps are not well distinguishable), up conversion of the modulated signal frequency bands while respecting the prescribed channel spacing, radiofrequency power amplification, band-pass filtering in the band of each channel and coupling of the filtered signals with the antenna for transmission thereof. In reception are carried out the dual operations of coupling of the reception signal to the channel filters, radiofrequency amplification of the filtered signals, down conversion of the bands of each channel within the intermediate frequency band, demodulation of each channel, base band equalization, decoding and error correction if necessary.

After briefly explaining the operation of the SDH-MX/DX and MPI blocks that of the SDH-ECF block remains to be discussed, i.e. the MCF and SEMF component blocks, to clarify the opportunities offered by the SDH network to management functionality of the MANAGER block. A large part of them are supplied by the many sophisticated connection possibilities which the SDH network makes available to the MANAGER block for communication with the 'objects' managed, with the latter being located any place in the TMN. Consequently, before proceeding, it seems useful to discuss in greater detail the functions of the SDH-MX/DX block as regards the physical support which the DCCs supply to the connection paths within the network.

First let us consider the STM-N(1-2), STM-N(1-3) and STM-N(1-4) pluralities outgoing from N1 (FIG. 1) through the MPI blocks and respectively directed toward N2, N3 and N4. As mentioned above, the SDH-MX/DX block generates the bytes of the RSOH and MSOH of the STM-N modules located on the lines belonging to each outgoing plurality. For each STM-N it injects in the 3xN serial bytes making up the N DCCRs and the 9xN serial bytes making up the N DCCMs as many serial bytes received from the MCF block through the DCC-LS serial lines.

Now let us consider the STM-N(1-2), STM-N(1-3) and STM-N(1-4) pluralities entering N1 (FIG. 1) through the MPI blocks and coming respectively from N2, N3 and N4. The SDH-MX/DX block looks for the frame synchronizing of the STM-N modules coming from the lines belonging to each plurality, after which for each STM-N it processes the significant bytes of the RSOH and MSOH and serially sends to the MCF block the 3xN serial bytes making up the N DCCR reception channels and the 9xN serial bytes making up the N DCCM reception channels, using therefor the DCC-LS serial lines.

As regards operation of the regenerator diagrammed in FIG. 5 it is premised that, since the connecting lines LP(1-2) are sections of a radio link, the regenerator is in reality a repeater. In the repeater the SDH-RIG block performs all the functions called for in the CCITT Recommendations as the responsibility of the regenerators, excepting control and communication, which are performed by the SDH-ECF block of the repeater, in accordance with procedures analogous to those of the block of the same name of FIG. 4.

Now considering the direction of propagation of the signals on the lines LP(1-2) from node N1 to node N2, the MPI(1-2) block opposite node N1 receives the radiofrequency signal and performs the above mentioned functions leading to obtaining STM-N modules applied to the lines of the STM-N(1-2) plurality entering the SDH-RIG block. The SDH-RIG block looks for the frame synchronizing of the entering STM-N modules, after which for each STM-N module it processes the bytes of the Regenerator Section Overhead (RSOH) and serially sends to the SDH-ECF block the 3xN bytes making up the N DCCR reception channels, using therefor the DCC-LS serial lines. The SDH-ECF block in turn places the content of messages to be sent to node N2 within the DCCR transmission channels, which reach the SDH-RIG block by means of the DCC-LS serial lines. The SDH-RIG block injects the DCCR channels into the corresponding 3xN serial bytes of the RSOHs of outgoing STM-N modules obtained by synchronizing the entering STM-N modules with the network clock. The synchronous STM-N modules are then applied to as many lines of an STM-N(1-2) plurality outgoing from the SDH-RIG block and entering the MPI(1-2) block opposite the node N2. The MPI(1-2) block completes on the entering signals all the operations mentioned above for obtaining a radiofrequency signal, which is transmitted on the LP(1-2) lines directed to node N2. The same remarks apply for the direction of propagation of the signals from node N2 to node N1.

The DCCM and/or DCCR channels which in the above description of the SDH-MX/DX and SDH-RIG blocks led to the MCF blocks are not originated or terminated by these blocks. The origin and/or termination of the messages which traverse the MCF block of FIG. 4 are based on the APP, SDH-MX/DX, MPI, MANAGER and PC blocks, and finally on any other management entities included in the nodes of the network of FIG. 1 which use the transport means of the SDH network consisting of the DCC channels to communicate, directly or indirectly. As mentioned in the introduction for the Synchronous Digital Hierarchies (SDH), the MCF block is a function which facilitates transport of the TMN messages between the application processes which participate in management, without therefore originating or terminating application messages. The information conveyed in the above introductory part will now be amplified in discussing the operation of this block and the characteristics of the DCC, V, F and Q interfaces called for between the MCF block and the SDH-MX/DX, SEMF, PC and MANAGER blocks respectively.

That stated, the MCF block operates as follows:
- it receives and queues messages coming from the SDH-MX/DX, SEMF, PC and MANAGER blocks by means of the DCC-LS lines and the V-bus, F-bus and Q-bus busses;
- analyzes the address field of the various messages to complete the appropriate routing thereof; and
- converts the protocol connected with the physical level (1) of a message received at an interface into the protocol connected with the physical level of the same message sent to a destination interface, if said protocols differ.

The DCC, V, F and Q interfaces are explained briefly below while specifying that the present invention, which concerns essentially the operation of the SEMF block, is not influenced by the protocols present at the above mentioned interfaces.

At the DCC interface there operates a 7-level OSI communications protocol especially suited to meeting the requirements for management the transfer of messages termed 'Operations, Administration, Maintenance and Provisioning' (OAM&P) by means of the DCCs. The protocol stack is shown in FIG. 6-1/G.784, page 19, of CCITT Recommendation G. 784. In the stack the protocol of the lowest (physical) level is supplied by the DCCR and DCCM channels which travel on the DCC-LS serial lines while the highest (application) level includes the following applications:
a) ASE (Application Service Element) for OAM&P.
b) CMISE (Common Management Information Service Element), which is a protocol based on the 'object oriented paradigm representing the network entities, the network management functions and information in general, as objects characterized by a set of attributes and operations which can be performed thereon. The CMISE services can enable a network manager to create or delete the objects (CREATE/DELETE), define or redefine values of the attributes of the objects (SET and GET), call for operations on the objects (ACTION) and receive reports from the objects (EVENT REPORTS).
c) ROSE (Remote Operation Service Element) allows a system to request an operation of another system and be informed of the results of that operation.
d) ACSE (Association Control Service Element) supplies services to initiate and terminate an association (connection) between two applications, an association which is used to carry the management messages corresponding to the services supplied by CMISE.

The Q interface uses protocols especially adapted for the system/equipment dialog seen from the viewpoint of Recommendation M.30 for TMNs. Especially explicative examples of the possible uses of the Q interface are shown in FIGS. 3-1/G.784 to 3-9/G.784 of CCITT Recommendation G.784.

At the Q interface are prescribed two different protocol types of which a first one uses a shorter stack than the 7-level OSI stack used by the second. The short protocol stack is better suited to communications within local networks and is in turn specified in accordance with two different embodiments called A1 and A2. The complete stack is better suited to meet the requirements of the more complex elements of the SDH network and is specified in three possible procedures called B1, B2 and B3. The functional definition of the term 'SDH network element', also termed Network Element (NE) is set forth on page 4 of CCITT Recommendation G.784. The five possible protocol stacks of the Q interface are shown in FIG. 1/G.773, page 5, of CCITT Reccomendation G.773. In these stacks the protocols of the lowest level are in accordance with CCITT Recommendations covering data transmission, e.g. X.25, V.24 or EIA IRS 485. The possible speeds for data on the full-duplex serial Q-bus go from 1,200 to 64,000kbit/s. The highest level includes the Network Management-Application Service Element (NM-ASE) and the above mentioned CMISE, ROSE and ACSE applications.

The F interface, not being specified, can be freely implemented by the builder. In the example a protocol stack similar to Al of the Q interface is used. As regards the V interface, it is indicated in the CCITT Recommendations only as a reference point V and the connection at this point is provided by means of a microprocessor bus transporting only the CMISE application messages, no protocol operation is performed at the ends of the connection and what take place are mere reading and writing operations performed by the SEMF block within a buffer for which the MCF block is responsible.

We shall now discuss operation of the SEMF block (FIG. 4) in greater detail than in the introduction to Synchronous Digital Hierarchies (SDH), where mention was made of the presence of interfaces between the serial S-bus and the reference points Sn belonging to the functional blocks (not shown in FIG. 4) in which the SDH-MX/DX and MPI blocks are functionally divisible. It is specified here that those interfaces correspond to the sub-blocks H/S of FIGS. 4 and 5, whose function is to appropriately serialize the information located at the points Sn associated with the above mentioned functional blocks and deserialize the information coming from the SEMF block and directed to those blocks and then cause it to reach the reference points Sn.

The information reaching the SEMF block through S-bus concerns mainly but not exclusively the signaling of circuit failures and operating irregularities and defects by the SDH-MX/DX and MPI blocks. This information is set forth exhaustively in tables 5-1/G.783 to 5-11/G.783 of CCITT Recommendation G.783. These tables also indicate the resulting actions to be undertaken within the functional blocks as they are set forth in the appropriate sections of the Recommendation. These actions consist principally of insertion of alarm indications (AIS, FERF, FEBE) in some bytes (K2, G1) of the SOH of the STM-N frames involved, as set forth in the paragraphs entitled "Section maintenance signals" and "Path maintenance signals" on pages 10 and 11 of CCITT Recommendation G.709. The actions indicated in the tables take place on the basis of commands sent by the MANAGER block.

The SEMF block applies filtering mechanisms to the data coming from S-bus to reduce the quantity of data to be processed and make the information acquired more persistent. For this purpose the filters used are: an integrator for the irregularities in the space of a second, a detector of defect persistence, and a filter processing the outputs of the two above and supplying more stringent error indications. As mentioned above, the SEMF block operates in accordance with 'object oriented' methodology, which is used uniformly within the network of FIG. 1 both in the management applications and the communications protocols. A very general indication of the internal structure of the SEMF block is shown in FIG. 5-1/G.783 of CCITT Recommendation G.783 where are shown in addition to the filters three more functional blocks called MANAGED OBJECTS, EQUIPMENT AGENT and REAL-TIME CLOCK, not shown in FIG. 4. The MANAGED OBJECTS block processes the information present at the output of the filters to make it conform to the 'objects' paradigm and makes it available in this form to the EQUIPMENT AGENT block. The EQUIPMENT AGENT block converts the information received from the MANAGED OBJECTS block into message of the CMISE protocol which it transfers to the MANAGER block through V-bus and MCF. This block also answers the CMISE messages coming from the MANAGER block by the same path and executes on the objects the operations requested by the MANAGER, if necessary through the MANAGED OBJECTS block.

The type of information treated by the MANAGED OBJECTS block and then by EQUIPMENT AGENT depends on the peculiar management functions provided in the MANAGER block for control of the SDH equipment.

We shall therefore discuss very briefly the operation of the MANAGER block of FIG. 4 with the aid of the personal computer PC, which could prove very useful in the equipment installation and initialization step and during troubleshooting and maintenance operations. The personal computer PC could also perform more complex functions than just mentioned and become a manager fully independent of the MANAGER block. Other managers could be added to these two. In this case the system would be managed in parallel by a plurality of coordinated managers as appears from the diagram of FIG. 3 which shows several MANAGER and AGENT blocks.

The MANAGER block of FIG. 4 is physically a management processor located by convention in node N1 (FIG. 1). Functionally it is a complex management entity dedicated to control and maintenance of resources both inside and outside of node N1 and which constitute all together the managed subsystem. These resources are the network elements NE, and more generally TMN, included in nodes N1, N2, N3 and N4.

As concerns the management functions for control of not strictly SDH elements, as e.g. the telephone exchange APP of FIG. 4, there is generally provided use in the SDH of Gateway Network Elements (GNE) having the function of protocol adapters. The management functions of the MANAGER block relating e.g. to the telephone exchange APP and the like could concern mostly the aspects connected with insertion thereof in a network, such as for example balancing telephone traffic on the LP lines, because said exchanges already possess their own processors which control their operation and administer and maintain their resources.

Before it can carry out the other management functions, the MANAGER block must perform the function concerning creation and management of as many control channels ECC as are needed to be able to talk with the managed elements.

In the non-limiting example, for the sake of simplicity, the only management functions discussed are those concerned with Synchronous Digital Hierarchies (SDH). Among these, those of checking failures, in particular overseeing alarms and monitoring operational performance, are very important for the purposes of the present invention since they give rise to event reports. Another function to be mentioned, if called for, is historical memorization in the LOG of the events coming from the above activities. In the example, as mentioned in the comments for FIG. 3, the MANAGER block of FIG. 4 does not use the content of the LOG to recover its own alignment but it can use it to generate periodic printouts or for other similar purposes.

For the details of the SDH management functions just mentioned, reference is made to Chapter 5, 'Management functions' of CCITT Recommendation G.784. It is again pointed out that the MANAGER block of FIG. 4 using the Embedded Control Channels (ECC) is capable of managing the event report in network elements (NE) located in any node and/or regenerator of the network of FIG. 1. The MCF and SEMF blocks of FIG. 4 implement their multiple functions using microprocessors.

Those skilled in the art, in the light of the above discussion and the lessons contained in the specifications mentioned, and exercising common knowledge in the digital signal transmission field together with common knowledge in the field of microprocessors and handling of signaling in telecommunications networks can provide the circuits and make operative the various blocks of FIGS. 4 and 5 excepting those functions of the SEMF block which concern specifically the present invention so that the discussion above of FIG. 3 and below of FIGS. 6, 6.a, 7, 8, 9, 10, and 11 applies.

At this point there are all the elements for assigning the different modules of FIG. 3 to respective functional blocks of FIGS. 4 and 5. With reference to FIGS. 3 and 4, the MANAGER module is assigned to the MANAGER block, the PROTOCOL STACK module is assigned to the MCF block, and to the SEMF block are assigned the remaining modules, i.e. EVENT DETECTION, COD-CIR, EVENT REPORT (AGENT) and ALIGNMENT RECOVERY and to this block is also assigned the event buffer which provides the circular queue. As concerns the regenerator of FIG. 5 the modules of FIG. 3 excepting the MANAGEMENT module, which is not called for here, are assigned to the SDH-ECF block and thence distributed to the included blocks MCF and SEMF (not shown) by the same assignment procedures applicable to the blocks of the same names of FIG. 4.

Going into greater detail than for the SEMF block, to the MANAGED OBJECTS block can be assigned the modules EVENT DETECTION, COD-CIR and AUGNMENT RECOVERY and also the event buffer while the EVENT REPORT (AGENT) module is assigned to the EQUIPMENT AGENT block. If the LOG is used it also is included in the MANAGED OBJECTS block.

The event buffer located in the SEMF block of FIG. 4 and the means which allow its reading and writing are shown in FIGS. 6 and 6.a. FIG. 6 shows a Q vector of n elements corresponding to the aforesaid event buffer. The Q vector is written by means of a writing pointer, corresponding to the value of a variable W which can assume integer values between 1 and n. By convention, the writing pointer indicates the address of the next writing in the Q vector. Said vector can be read by k simultaneously active reading processes which use for the purpose as many reading pointers. Each reading pointer corresponds to an element of an R vector of k elements which can assume integer values between 1 and n. A reading pointer associated with a generic process indicates, by convention, the address of the next reading in the Q vector which will be performed by that process.

The figures also show an O vector of k elements, termed below overflow vector, where each element is a logical variable which can assume only 'true' or 'false' values. An element of the Q vector is shown apart with the word EVENT. In discussing the following figures for the software modules of the non-limiting example, for the sake of simplicity they will be considered events which can be described by a single element of the Q vector. This does not decrease the general nature of the present invention for the cases in which the events consist of several elements and can have fixed or variable length. The treatment of these cases falls within the skills of the programmer. Individual reading pointers are indicated henceforward by R(m) where m is an index which may vary unitarily from 1 to k. Similarly, each element of the O vector is indicated by O(m) and associated with a respective R(m) element of the R vector.

FIG. 6.a shows a representation of the Q vector as a circular queue obtained by means of a unitary n module increment of the writing pointer W and the reading pointers belonging to the vector R. In the figure circular queue is represented by a circular crown divided in n sectors which correspond to the n elements of Q. The pointers are represented as vectors which start from the center and are directed toward a respective element, each unitary increase of a pointer produces a 360°/n rotation thereof. A semicircular arrow indicates the direction of rotation common to all the vectors. Of these, one represents the pointer W and three others, indicated by R(1), R(2) and R(k), represent three reading pointers differently positioned in the queue. The pointer W is increased at random time instants since event generation is random. The reading pointers undergo increases temporally independent of each other and which occur at random and asynchronous times in relation to those of W increment. The increases of the pointers R(m) are linked to the activity of as many AGENTs in relation to the availability of the respective MANAGERs. As a result of the above mentioned random occurrences and starting from an initial situation in which both W and R(m) have unitary value, the evolution thereof can be quite arbitrary and give rise to different situations of which one is shown in FIG. 6.a. For the purpose of designing the software which manages the queue and performs the realignment, it is fundamental to obtain criteria for diagnosing the different situations in which the queue could find itself, because several decisions will be made on this basis. These situations, appraised with respect to a generic reading process, are essentially 'queue empty', 'queue partly full', 'queue full' and 'queue overflow' with rispect to the generic reading process. Among these, 'overflow' and 'queue empty' are the only ones which can cause trouble. The trouble with overflow is loss of remote events by overwriting, while the trouble with queue empty is the reading of null or already read events.

Subject to appropriate limitations, the criteria for establishing the overflow and empty queue situations consist of equality of the writing pointer W and the reading pointers R(m) verified during writing and reading respectively. To understand and discuss this affirmation it is appropriate to keep the definition supplied above of the meaning of the term 'pointer' and also to establish that the comparison of the value of the pointers W with R(m) is made before the writing or reading in the queue and before increase thereof. This is not a limitation but only a convention used as a basis for further reasoning.

Thus, the mere condition W = R(m) is not enough to identify a single queue situation. The condition verified before a writing could mean queue overflow (after completion of the writing) if the queue is already full, or first queued event if the queue is empty. The condition W = R(m) verified before a reading could mean empty queue or full queue.

It has been found that by imposing the constraint that the writing pointer W should always precede the reading pointer R(m) it is possible to diagnose the overflow and empty queue situations univocally.

This precedence constraint of the pointer W is imposed in the following manner. At the end of the initialization step wherein W and all the R(m) are set at unitary value, it is necessary to avoid the comparison W = R(m) before the first queue writing since it is certainly true, signaling overflow although the queue is empty. In addition, before each queue reading, if W = R(m) it is necessary to stop reading until at least one writing has been completed, i.e. until W ≠ R(m). By so doing there remains one possible ambiguity to solve due to the fact that the queue writing cannot be stopped in case of overflow related to a reading process m on pain of loss of events for the processes for which the queue is not overflowing. This ambiguity appears when, before a reading, W = R(m) and this condition could be a result either of empty queue or of completely full queue after an overflow. The ambiguity is eliminated merely by checking, before reading, whether there is still an overflow condition of the queue Q for the above mentioned m reading process. If there is no overflow it follows that the W = R(m) condition means empty queue with certainty. Overflow is signaled by the value 'True' of the element O(m) of the vector ○.

Concerning sizing of the queue Q the following factors conditioning its length must be considered:
- factors directly based on the dimensions of the managed subsystem, as e.g. the number of state variables considered and the relative length of the event message;
- factors dependent statistically upon the activity of the managed subsystem, as e.g. the probability that a given event would have to appear within a certain time; the impact of the latter factors on determination of the length of the queue Q can be appraised by knowing the average and peak rates of the event emission appraised in the managed subsystem by the MANAGER block of FIG. 4. The length of the queue must allow absorption of event peaks for the entire duration of the peaks, especially in the most unfavorable cases;
- factors dependent upon the ability of one or more MANAGERs to process the message received. For these factors it must be considered that, while the activity of a MANAGER m is independent of the reading of the queue induced by its own AGENT m, the negative effects of saturation of real processing time of the MANAGER m have repercussions upstream even to conditioning queue reading times. If the MANAGER m were overloaded, it could no longer accede to the event message coming from the AGENT m, and after some time the PROTOCOL STACK module would stop arrival of new events through an appropriate flow control mechanism. The result of this for the AGENT m would be temporary prohibition of starting a new reading of the circular queue Q where a peak of events could accumulate in the meantime due, as can be seen, to other than probabilistic causes generating peaks in event emission. In the case just considered the sizing of the queue must be done allowing for two conflicting requirements, the first being the ability to accommodate a large number of events when the AGENT delays emptying the queue, and the other being not occupying more memory than necessary. The first requirement is dictated by the desire to not lose event information during peaks, and leans toward elongation of the queue with respect to a length capable of covering MANAGER activities considered normal, while the second requirement leans toward shortening of the queue; clearly the optimal length must be a compromise between these two requirements; and
- factors dependent upon the capacity of the communications channels used to transfer the events from the queue to the MANAGER; for the purposes of sizing the queue these factors lead to reasoning like that discussed in the last paragraph.

From the total of the above observations it can be understood how sizing of the queue on a purely theoretical basis, even though possible in principle, would be too onerous, especially because of the complexity of the mathematical models describing the different factors involved. For example, it could be difficult to determine the event emission rates, because strongly dependent on not easily predictable conditions such as anomalous radio propagation characterized by fading and interference from multipaths. In any case the queue length calculated theoretically would require experimental verification. Thus it is more practical to complete the theoretical notions with an empirical approach appraising the optimal length of the queue by means of successive approximations involving:
a) an initial estimate of the queue length;
b) appraisal of the long-term average degree of filling of the queue;
c) appraisal of the overflow rates in a predetermined observation period;
d) variation of the estimated length by an amount such that the degree of filling and/or overflow rates decrease;
e) iteration of steps b), c) and d) until reaching an optimal length such that the queue remains empty on average in the long term observation and at the same time absorbs the event peaks well without overflowing or at least overflowing rarely; and
f) increase in the optimal length by an appropriate margin allowing for additional causes difficult to foresee, in addition to those mentioned above, and capable of influencing significantly the factors on which the queue lengths depends.

The above observations on the queue Q make clear another advantage of the realignment procedure which is the object of the present invention and which had not yet been noted; it lies in the strong attenuation of the negative consequences for the managed subsystem when the circular queue has not been correctly sized. Indeed, in the above hypothesis the overflow condition can occur rather frequently but it automatically starts another state information realignment and thus the MANAGER always knows the actual state of the managed subsystem.

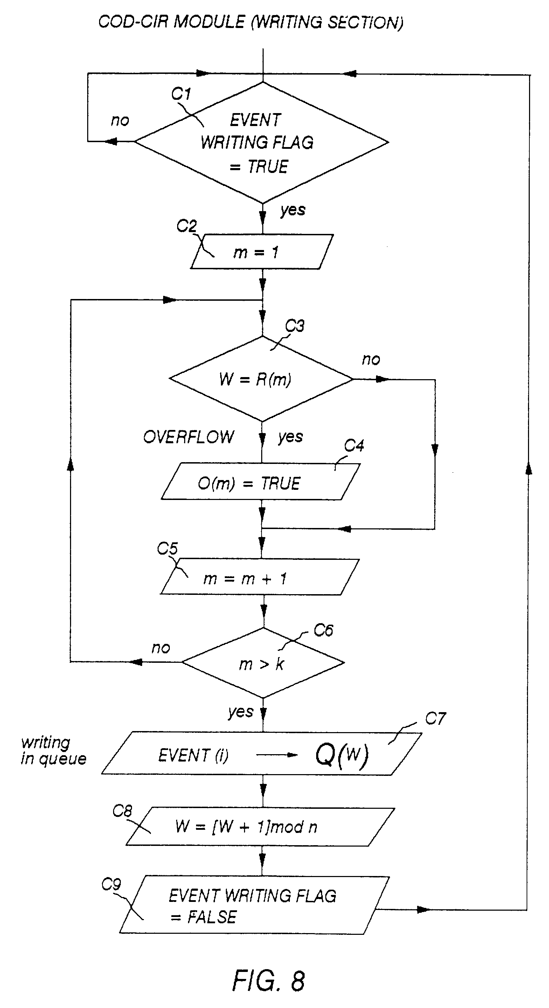

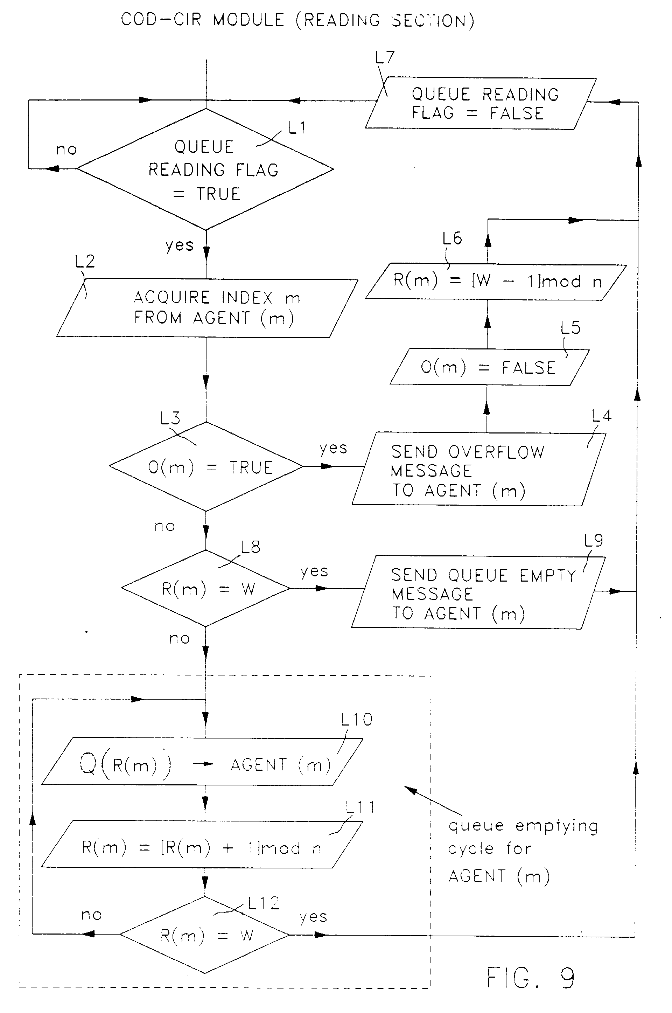

The above observations on the queue Q have also simplified illustration of the COD-CIR modules which read the queue and write it and whose simplified flow charts are shown in FIGS. 8 and 9. These modules are explained together with the remaining modules, which handle event detection, event report and realignment and whose simplified flow charts are shown in FIGS. 7, 10 and 11 respectively. All the program modules explained below are interdependent, i.e. the processor responsible for them executes them in multiprogramming. This fact involves an intrinsic difficulty in their representation. For this purpose there are known different possible representation procedures of which, for example, a, first one is a formal description based on the use of a pseudocode, i.e. a simulated program; a second goes through the use of Petri networks; a third is a representation in Specification Description Language (SDL), described in Recommendation CCITT Z.100; lastly, a fourth is supplied entirely by flow charts comprising wait cycles in which are repeatedly interrogated appropriate flags started to request a service and stopped on completion of the service. This last procedure seems the most immediately comprehensible for the existing coordination among the different modules and accordingly is used in the figures discussed below. In the practical embodiment the wait cycles are provided differently than depicted, because otherwise they would constitute a useless waste of real time. In practice it is the operating system that controls the activities of the microprocessor, which also coordinates all the activities of the different program modules and permits their synchronization.

As a preliminary to execution of the above mentioned program modules, but for the sake of simplicity not shown in the figures, there is a general initialization step to which reference will be made from time to time with the explanation of the related operations.

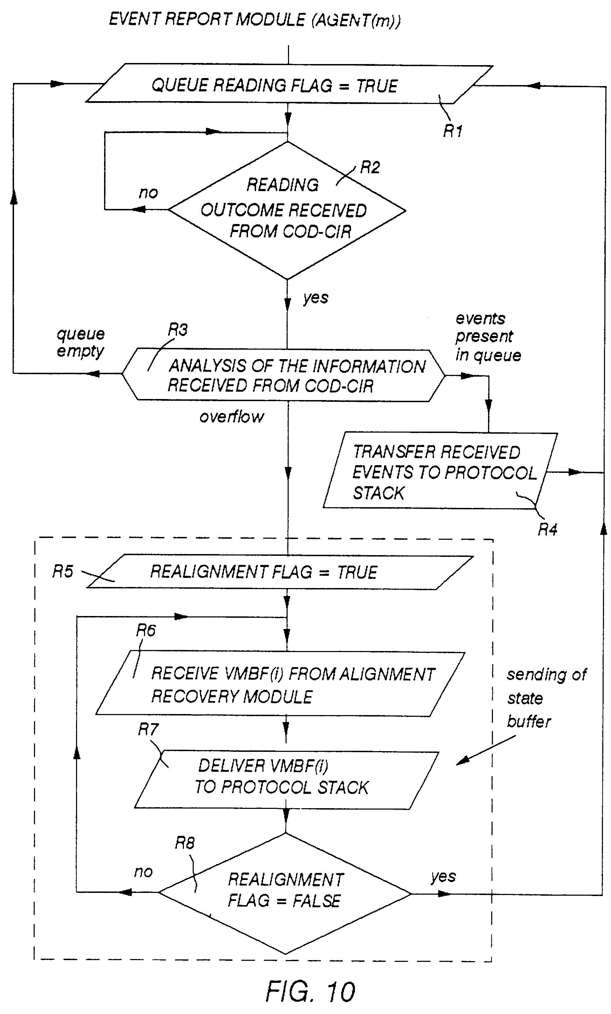

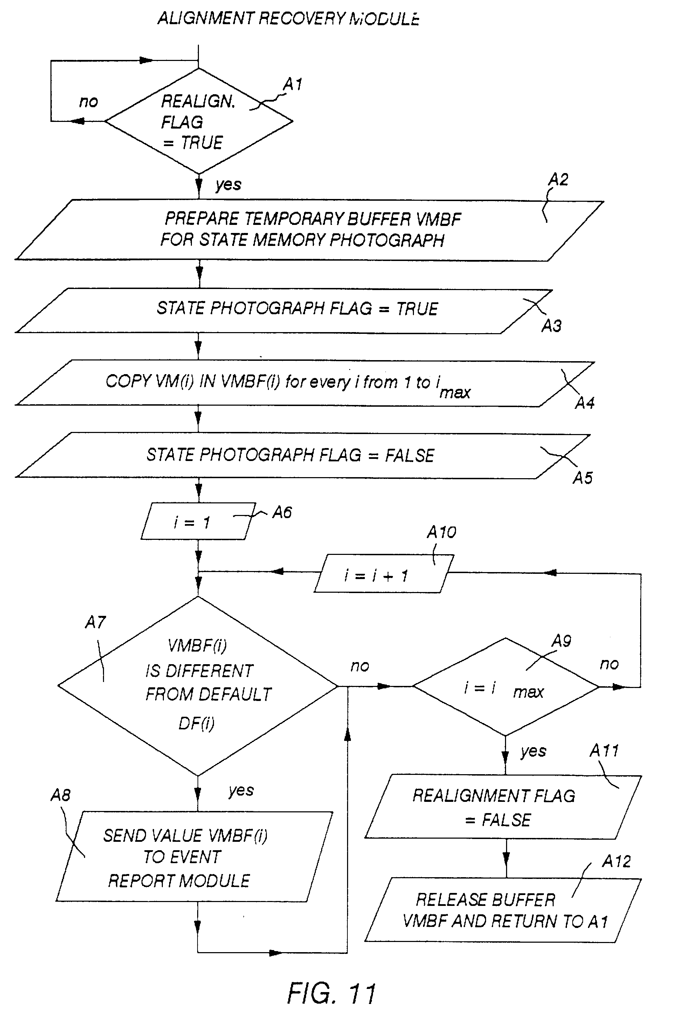

FIG. 7 shows a flow chart of the EVENT DETECTION module made up of the following program steps, indicated by E1 to E11 and listed as far as possible in sequential order.
- In step El an index used for identifying the state variables and the events is set at 1;
- in E2 is read the current value V(i) of a state variable identified by the index i and the value read is the one appropriately filtered by the software filters present in the SEMF block. In a large part of the cases, V(i) is a logical value which signifies, e.g. the presence or absence of an alarm, passing or not of a threshold, but it is not excluded that it could be a digitized analog value. The number of state variables participating in the event report and which therefore could potentially generate detectable events is indicated by iₘₐₓ. In the initialization step will be allocated a table of correspondence between the values of i and the type of variable preselected and in this sense the index i can also act as a variable, and thus event, indicative;
- in E3 and E4 the value V(i) is compared with a value VM(i) of the variable i present in a state memory and zeroed in the initialization step;
- E5 is reached if in E4 V(i) is different from VM(i), which is equivalent to detection of an EVENT(i) for the state variable V(i), done in E5; the detection consists of discovering that the new value of V(i) was unknown;
- in the following step, E6, is executed a wait cycle which delays updating of the state memory VM and consequently writing in the queue Q until a PHOTO FLAG is deactivated. During this time (lasting a few microseconds) the detection activity performed by this module is suspended to allow the AUGNMENT RECOVERY module of FIG. 11 to execute a copy of the state memory. The duration of the interruption of the detection activity is several orders of magnitude less than the other activities considered, such as for example the event transfer time through the PROTOCOL STACK module, therefore the emptying of the queue Q by the EVENT REPORT (AGENT(m)) modules (FIG. 10) is not at all disturbed nor is detection of new events;
- in E7 the value V(i) is written in place of VM(i), updating the state memory;
- in E8 is started an EVENT WRITING FLAG whose meaning is to advice the writing section of the COD-CIR module of FIG. 8 that a new event has been detected and is available for writing in the queue Q; when the event is written in the queue the index is increased in the following step E9 and in E10 it is compared with iₘₐₓ for repetition of the cycle included between steps E2 and E10 for another value V(i);
- if from the above comparison in E4 V(i) = VM(i), no event is detected and the program skips to step E9 for repetition of the cycle; and
- if in E10 i exceeds iₘₐₓ it means that a complete cycle of updating of the entire state and detection of the related events is finished; in this case the program enters step E11 in which it waits until expiry of the sampling time of the entire state assigned in the initialization step. As regards determination of the sampling time, it is recalled that the events taken into consideration in the event report are those at the output of the filters present in the SEMF block. Thus are excluded those events of very short duration and slightly persistent, as e.g. Rayleigh's fading, which require very short intervention times on the order of about ten milliseconds. The amplitude of the sampling interval allows observation of a large number of state variables by the technique of multiplexing in time (polling).

FIG. 8 shows a flow chart of the COD-CIR (WRITING SECTION) module consisting of the following program steps indicated by C1 to C9 and listed as far as possible in sequential order:
- in step C1 is executed a wait cycle on the EVENT WRITING FLAG when the latter is active and in C2 the index m is set at 1 and identifies an element of the vector R of the reading pointers and of the overflow vector O, or yet again of the generic reader (AGENT);
- in C3 equality of the writing pointer W to a generic reading pointer R(m) is checked, if they are equal it means that there is overflow of the queue for the AGENT (m) and in the following step C4 the value of the element O(m) is set at 'true' otherwise this last step is skipped. In the initialization step the settings were W = 1 and R(m) = 1 for every m; in addition and only the first time the flag was active in C1, to allow the writing pointer to precede the reading pointers, steps C2 to C6 were not executed on the basis of the remarks on this subject for the queue Q;
- steps C5 and C6 allow completion of the overflow verification cycle for all the elements of R(m);
- in the following step C7 is executed writing of the EVENT(i) in the queue Q in the position indicated by the writing pointer W;
- in C8 the value of W is increased by one unit, module n, where n is the length of the queue Q; and
- in C9 the EVENT WRITING FLAG is disabled and control returns to step C1 to wait for a new queue writing event.

With reference to FIG, 9 there is shown the flow chart of the COD-CIR module (READING SECTION), which has the following program steps indicated by L1 to L12 and listed as far as possible in sequential order:
- in step L1 a wait cycle on the QUEUE READING FLAG is executed when the latter is active and the module acquires in L2 the identifier m from the AGENT(m) of FIG. 10 which it asked to read;
- in L3 the value O(m) is read to verify the overflow condition of the queue Q for the AGENT(m) and, if it is verified, in step L4 an overflow message is sent to the AGENT(m) which starts realignment;
- in the next step L5 the logical value of the element O(m) of the overflow vector is set at 'false' to allow verification of the overflow also during the realignment and make possible reiteration of the realignment cycle described below;
- in L6 the value of the reading pointer R(m) is set equal to that of writing W decreased by one module n, which allows resumption of queue reading starting from the event that caused the overflow for the reading process associated with the AGENT(m). In reality it would not be necessary to read the above mentioned event because the state variable from which it derives has already been updated and its updated value will be sent to the MANAGER during realignment; nevertheless it is necessary to avoid coincidence of R(m) with W, which would avoid this superfluous reading, because otherwise in step C3 of FIG. 8 the overflow condition would always be confirmed, frustrating an interrogation on this condition during the realignment cycle;
- in the next step L7 the QUEUE READING FLAG is deactivated. Steps L5, L6 and L7 allow resumption in the appropriate manner of the queue reading for the AGENT(m) after realignment, which it will complete before reactivating the QUEUE READING FLAG. When this flag is reactivated, the readings will begin with the event that caused the overflow which will be followed by the events queued during the realignment cycle; after step L7, control returns to step L1 in which the module awaits enablement for a new queue reading;
- returning to step L3, if in this step there is no overflow for the AGENT(m) the program verifies in L8 the empty queue condition for AGENT, indicated by R(m) = W. If the queue is empty, in L9 an empty queue message is sent to the AGENT(M), then control passes to step L7, in which the QUEUE READING FLAG is deactivated, and then to the wait cycle included in step L1. As may be seen, if the queue is empty no queue reading is done, to allow the writing pointer to precede the reading pointer, i.e. to never be passed over, on the basis of the above remarks on the circular queue Q; and
- if in L8 the queue is not empty, there are executed cyclically steps L10, L11 and L12 for reading of all the events queued for the AGENT(m) and which in L10 are delivered to it, and control then returns to the wait cycle of step L1.

FIG. 10 shows the flow chart of the EVENT REPORT module corresponding to an AGENT(m). The module exhibits the following program steps indicated by R1 to R8 and listed as far as possible in sequential order:
- in step R1 the AGENT(m) activates the QUEUE READING FLAG to tell the COD-CIR module of FIG. 9 to execute a reading in the queue Q;
- in step R2 is completed a wait cycle to allow the COD-CIR module of FIG. 9 to read the queue;
- in step R3 the message resulting from reading of the queue is received and analyzed, giving rise to three different branches in the flow chart;
- a first branch leads directly into R1 when the message received is empty queue;
- a second branch leads into R4 when the message received consists of the events read in the queue. In this case the duty of the AGENT(m) is to return the events received to its own MANAGER. For this purpose it delivers the events to the PROTOCOL STACK module, which transfers them to the MANAGER through a previously arranged communications channel. After which, control passes again to step R1 to allow the EVENT REPORT module to acquire new events from the queue;
- a third and last branch leads into R5 when the message received in R3 is queue overflow for the AGENT(m). The following steps R6, R7 and R8 constitute a realignment cycle which involves the AUGNMENT RECOVERY module of FIG. 11. Specifically, in R5 is started a REALIGNMENT FLAG for enablement of the operations of the AUGNMENT RECOVERY module;
- in R6 a variable value state identified by the index i is received from the ALIGNMENT RECOVERY module;
- in R7 the value received in R6 is delivered to the PROTOCOL STACK module for transfer to the MANAGER;
- in R8 the REALIGNMENT FLAG is interrogated and if it is still active it means that the realignment is not yet finished, i.e. not all the variable state values received from the AUGNMENT RECOVERY module have been supplied to the PROTOCOL STACK module and in this case the cycle continues. If the contrary is true, the realignment can be considered terminated and control returns to step R1; and
- after step R8 it is best to insert another interrogation O(m) = True (not shown in FIG. 10), along the branch of the 'no' answer, which allows reiteration of the realignment cycle R6, R7 and R8 in case of overflow during same. Specifically if the outcome of the above mentioned interrogation is 'no' the cycle is not interrupted; if the answer is 'yes' there are introduced two steps (also not shown in FIG. 10) identical to those indicated by L5 and L6 in FIG. 9, after which control returns to step R5 for reiteration of the realignment cycle. This addition involves insertion of an interrogation of the REAUGNMENT FLAG in the AUGNMENT RECOVERY module of FIG. 11 upon each value VMBF(i) sent to this module.

FIG. 11 shows the flow chart of the ALIGNMENT RECOVERY module, started in step R5 of the AGENT(m) of FIG. 10. The module exhibits the following program steps, indicated by A1 to A12 and listed as far as possible in sequential order:
- in step A1 the program waits for starting of the REAUGNMENT FLAG and upon said starting enters A2;
- in step A2 is arranged a temporary buffer VMBF to receive a copy of the state memory;
- in A3 is enabled a STATE PHOTOGRAPH FLAG corresponding to the PHOTO FLAG interrogated by the COD-CIR module of FIG. 8;
- in A4 the content of the state memory is recopied in the buffer VMBF, suspending event detection for the few microseconds necessary to complete this operation. The recopied state corresponds to the one updated by the EVENT DETECTION module up to the time the queue overflow condition for the AGENT(m) was found true; therefore the state also includes the new variable value which generated the event causing the overflow. Writing of the buffer VMBF is also termed photographing because it exactly reproduces a subject and requires a very brief execution time;
- in A5 the STATE PHOTOGRAPH FLAG is disabled since copying of the state memory is finished;
- in A6 the index i is set at 1 for the beginning of a cycle consisting of the steps A7, A8, A9 and A10 in which appropriate values VMBF(i) of the temporary buffer VMBF are sent to the EVENT REPORT module of FIG. 10. Specifically:
- in A7 each value VMBF(i) is compared with a corresponding value DF(i), termed default, present in a default value memory DF, filled with said values during initialization, or with conventional values agreed by AGENT and MANAGER;
- the process reaches A8 only if in step A7 the value VMBF(i) is different from the corresponding default value DF(i). In this step the value VMBF(i) different from default is sent to the EVENT REPORT module of FIG. 10 and this allows optimization of the realignment;
- in steps A9 and A10 the index i is increased and compared with the maximum value iₘₐₓ for repetition of the comparison cycle until exhaustion of all the variables present in the temporary buffer VMBF, after which control passes to step A11. Recalling the remarks at the end of the explanation of FIG. 10 on the usefulness of inserting an interrogation of the REAUGNMENT FLAG in the AUGNMENT RECOVERY module, this interrogation could correspond to a repetition of step Al after step A10.
- in A11 the REALIGNMENT FLAG is deactivated because the realignment operation can be considered terminated; and
- in A12 the temporary buffer VMBF is released and control passes again to step Al in which is awaited the start for a new realignment cycle.

As mentioned above, sending of only the variable state values different from default is a sending procedure which allows economizing the state information to be sent to a MANAGER so that the latter can recover its own alignment. The economy is very advantageous when the state of the managed subsystem is defined by a large number of variables.

Another sending procedure, which however does not have the advantages of the above, is to send all the state variable values present in the temporary buffer VMBF.

In this concluding part of the description a fuller investigation must be made of the concepts of novelty and originality which the realignment procedure which is the object of the present invention possesses over the prior art, novelty and originality which, as repeatedly stated, lie principally in the fact that the realignment is executed by the managed subsystem. But how to justify the above affirmation to dissipate the legitimate doubt as to the real ability of a managed subsystem to realign its own MANAGER? A position which seems reasonable would be to analyze in detail each step of this procedure, then make a distinction between operations performed by the managed subsystem and those performed by the MANAGER, quantify the two activities thus distributed and draw the conclusions. Following this plan, in the procedure which is the object of the present invention it is the managed subsystem which completes the following actions:
- it notices the loss of alignment of its own MANAGER,
- secures the correct state information at the moment of the alignment loss,
- spontaneously sends to the MANAGER this state information without losing memory of the new events which it detected at the same time, and
- acknowledges that the realignment is finished and resumes sending events starting from those detected immediately after the alignment loss.

As regards the activity carried out by the MANAGER concerning its own realignment, it is important to make it clear that if the realignment is done sending all the state variable values rather than only the values different from default, the MANAGER will find itself automatically realigned during the normal management of the event report with no need of executing any particular activity in this respect. This affirmation can be explained by recalling that the realignment consists of sending to the MANAGER state variable values, which does not differ from sending events, the events being nothing but new state variable values.

If the realignment is conducted in optimized form, i.e. sending only the values other than default to the MANAGER, the MANAGER will have to be informed thereof since in the state information copy in its possession it will have to replace with default values the values which are not updated after completion of the sending. This involves for the MANAGER knowledge of when the realignment starts and ends. In this case the little information necessary for the MANAGER to be able to complete its own realignment is also supplied by the managed subsystem, e.g. as messages joined at head and tail with the default values it sends. Specifically the head message informs the MANAGER that the next values it will receive are state variable values different from default, while the tail message informs that reception of said values different from default is ended.

In view of the above, even optimizing the realignment, it can be reasonably stated that the realignment is substantially accomplished by the managed subsystem, indeed the activity accomplished by the MANAGER is reduced to very little if compared with that accomplished by the managed subsystem.

It can also be noted that the realignment procedure is started automatically at the instant the misalignment is generated and that there are never inconsistency periods, outside the period in which the realignment takes place.

## Claims

1. Procedure for realignment of a copy of the state information of a communication network managed subsystem (SDH-ECF, SDH-MX/DX, LP(1-2), LP(1-3), LP(1-4), SDH-RIG) owned by one, or more, independent communication network managers (MANAGER, PC) with the actual state information of said network subsystem, the realignment starting from one initial state known to said managers and being carried out by the managed subsystem in the following steps:
a) sampling the state variable values (V(i)) and comparing the values sampled with the state variable values previously sampled (VM(i)) and memorized in a state memory and detecting an event (EVENT (i)) every time the values compared differ;
b) updating the content of said state memory upon each event detected, obtaining said actual state;
c) writing sequentially said events in an event memory (Q) organized as a circular queue n event long;
d) reading said circular queue sequentially and asynchronously and independently of the writing, on behalf of independent reading processes (AGENT(m)) which report to events received to said one, or more, managers (MANAGER, PC) so as the managers can update a respective copy of the state information;
e) checking, upon each queue writing, for the presence of an overflow condition of the queue for each of said reading processes, the condition being true when a recent event is overwritten on a remote one not yet read;
f) updating an overflow vector (O) whose elements (O(m)) contain the logical values of the overflow conditions of a corresponding number of reading processes (AGENT(m));
g) resetting at a 'False' logical value said elements (O(m) of said overflow vector (O) and reading the content (VMBF(i)) of said state memory for the account of said reading processes which exhibit overflow in the queue (Q), then reexecuting said step d) and thereby accomplishing said realignment.

2. Realignment procedure in accordance with claim 1, wherein said elements (O(m)) of the overflow vector (O) are monitored even during the execution of realignment step g) for the reiterating the execution thereof in case of new overflow.

3. Realignment procedure in accordance with claim 1 or 2, wherein said content (VMBF(i)) of said state memory read for the account of said reading processes (AGENT(m)) is a subset of values of said state variables (VMBF(i)) which are different from respective values predetermined for all the state variables, termed also default values, and known to said managers (MANAGER,PC).

4. Realignment procedure in accordance with claim 3, wherein at the head of said values different from default (VMBF(i)) is placed a message which informs said managers (MANAGER,PC) of the fact that the next events which they will receive from said reading processes (AGENT(m)) are values of said state variables (VMBF(i)) different from default, and in that at the tail of said values different from default is placed a message declaring the end of reception of said values different from default.

5. Realignment procedure in accordance with any of the above claims, wherein said reading processes (AGENT(m)) which report to said respective managers (MANAGER, PC) the events received, entrust said events to communications protocols (PROTOCOL STACK) which deliver to said managers the events in turn received while ensuring sequential sorting of the transferred messages (EVENT(i), VMBF(i)) and also ensuring delivery of all the received messages.

6. Realignment procedure in accordance with claims 1 or 2, wherein said circular queue (Q) is written by means of a writing pointer (W) which addresses in the queue a start-writing position for a next event to be written in the queue (EVENT(i)), and in that each reading process (AGENT(m)) reads the queue (Q) by means of a respective reading pointer (R(m)) which addresses in the queue a start-reading position for a next event to be read in queue (EVENT(i)), with said writing pointer (W) and said reading pointers (R(m)) being increased by one module n after each operation referred to the circular queue (Q) in which they are involved, where n is a number of elements defining the queue length.

7. Realignment procedure in accordance with claim 6, wherein the position in the queue (Q) addressed by said writing pointer (W) always precedes, or at best coincides with, said position in the queue (Q) addressed by a respective reading pointer (R(m)).

8. Realignment procedure in accordance with claims 1 and 7, wherein an overflow condition is considered true for a reading process (AGENT(m)) when the respective reading pointer (R(m)) coincides with said writing pointer (W).

9. Realignment procedure in accordance with claims 1 and 8, wherein when an element (O(m)) of said overflow vector (O) has a 'false' logical value and simultaneously the value of said reading pointer (R(m)) of a reading process (AGENT(m)) joined with said element (O(m)) coincides with the value of said writing pointer (W) said circular queue (Q) is empty for that reading process.

10. Realignment procedure in accordance with claim 7, wherein the precedence or at most coincidence constraint of said writing position in the circular queue (Q) with respect to said reading position is achieved by imposing a writing as absolutely the first operation made in the circular queue (Q) and not performing any reading of the circular queue (Q) when the value of a reading pointer (R(m)) coincides with the value of said writing pointer (W).

11. Realignment procedure in accordance with claim 1, wherein the length of said circular queue (Q) is optimized by successive approximations in the following steps:
- storing of an initial estimate of the queue length;
- appraisal of the average degree of filling of the queue in a long observation period;
- appraisal of the overflow rates in a predetermined observation period;
- variation of the estimated stored length by an amount such that the average degree of filling and/or overflow rates decrease;
- iteration of the second, third and fourth step until reaching an optimal length such that said circular queue (Q) remains empty on average in the long term observation and said overflow rates fall to null or very small values; and
- increasing the optimal length by an appropriate margin allowing for additional causes difficult to foresee and capable of causing peaks of said events written within said circular queue (Q).

12. Communication network management system comprising one, or more, independent communication network managers (MANAGER,PC) of a same communication network managed subsystem (SDH-ECF, SDH-MX/DX, LP(1-2), LP(1-3), LP(1-4), SDH-RIG) said subsystem including:
means for sampling the state variable values (V(i)) of said network managed subsystem;
a state memory in which are written said sampled state variable values (V(i)), the content of said memory corresponding to an actual state;
first means for comparison of said actual state with a previous state and detecting an event (EVENT(i)) each time the compared values differ;
a n, event long event buffer (Q) in which said events are written sequentially;
first reading means which read said even buffer (Q) sequentially and asynchronously and independently of the writing, for the account of independent reading processes (AGENT(m)) which report the received events to said one, or more, network managers, so as the managers can update a respective copy of the network subsystem state information;
a writing pointer (W) and as many reading pointers (R(m)) as there are reading processes (AGENT(m)), said pointers addressing a respective next writing or reading position in said buffer (Q) and being increased unitarily module n upon each respective writing or reading operation in said event buffer Q and the writing pointer (W) always preceding said reading pointers (R(m)) or at most overlying them;
second comparison means which upon each writing in the event buffer (Q) compare the value of said writing pointer (W) with the values of said reading pointers (R(m)), the results of equality in the comparisons corresponding to the truth of overflow conditions of said buffer of a corresponding number of reading processes (AGENT(m));
an overflow vector (O) whose elements (O(m)) are joined with respective reading processes (AGENT(m)) and are updated by True' or 'False' logical values of said overflow conditions;
second reading means which, after resetting said elements (O(m)) of the overflow vector (O) to a 'False' logical value, read the content (VMBH(i)) of said state memory and transfer it to said reading processes (AGENT(m)) for which a respective overflow condition is true, then enabling the operation of said first reading means and thereby accomplishing a realignment of said respective copy of the network subsystem state information owned by a manager with the actual state information of said subsystem.

13. Communication network management system in accordance with claim 12, wherein said elements (O(m)) of the overflow vector (O) are monitored even during the execution of realignment step i) for reiterating the execution thereof in case of new overflow.

14. Communication network management system in accordance with claim 12 or 13, wherein said content (VMBH(i)) of said state memory read for the account of said reading processes (AGENT(m)) is a subsystem of values of said state variables (VMBH(i)) which are different from respective values predetermined for all the state variables, termed also default, and known to said managers (MANAGER,PC).

15. Communication network management system in accordance with claim 14, wherein at the head of said values different from default (VMBF(i)) is placed a message which informs said managers (MANAGER,PC) of the fact that the next events which they will receive from said reading processes (AGENT(m)) are values of said state variables (VMBF(i)) different from default and in that at the tail of said values different from default is placed an end-of-reception message of said values different from default.

16. Communication network management system in accordance with any of claims 12 to 15, wherein said reading processes (AGENT(m)) which report to said managers (MANAGER,PC) the received events, entrust said events to communications means (MCF) which process appropriate communications protocols (PROTOCOL STACK), said communications means (MCF) delivering to said managers the events in turn received, and said protocols ensuring the sequential sorting of the transferred messages (EVENT(i),VMBF(i)) and delivery of all the received messages.

17. Communication network management system in accordance with claim 12, wherein when an element (O(m)) of said overflow vector (O) has a 'False' logical value and simultaneously the value of a reading pointer (R(m)) of a reading process (AGENT(m)) joined to said element (O(m)) coincides with the value of said writing pointer (W), said event buffer (Q) is empty for that reading pointer.

18. Communication network management system in accordance with claim 12, wherein the precedence or at most coincidence constraint of said writing pointer (W) with respect to said reading pointers (R(m)) is achieved by imposing a writing as absolutely the first operation performed within said event buffer (Q) and not performing any reading of said buffer (Q) when the value of a reading pointer (R(m)) coincides with the value of said writing pointer (W).

19. Communication network management system in accordance with any of claims between 12 and 18, wherein said: sampling means, state memory, first and second comparison means, event buffer (Q), first and second reading means, writing pointer (W), reading pointers (R(m), and overflow vector (O) included in the network managed subsystem are carried out by means of a microprocessor.

## Patentansprüche

1. Verfahren zur Ausrichtung eine Kopie der Zustandsinformation eines durch ein Kommunikationsnetz verwaltetes Teilsystem (SDH-ECF, SDH-MX/DX, LP(1-2), LP(1-3), LP(1-4), SDH-RIG), das einem oder mehreren unabhängigen Kommunikationsnetz-verwaltern (MANAGER/PC) gehört, mit der effektiven Zustandsinformation des genannten Netzteilsystems, wobei die Ausrichtung von einem den genannten Verwaltern bekannten Anfangszustand ausgeht und durch das verwaltete Teilsystem in den folgenden Schritten ausgeführt wird:
a) Bemusterung der Werte der Zustandsvariablen (V(i)) und Vergleich der bemusterten Werte mit den vorher bemusterten und in einem Zustandsspeicher memorisierten Werten der Zustandsvariablen (VM(i)) und Identifizierung eines Ereignisses (EVENT(i)) immer dann, wenn die verglichenen Werte voneinander abweichen;
b) Aktualisierung des Inhalts des genannten Zustandsspeichers nach jedem identifizierten Ereignis, wodurch man den genannten aktuellen Zustand erhält;
c) sequentielles Aufzeichnen der genannten Ereignisse in einem Ereignisspeicher (Q), der wie einen Ereignisse lange ringförmige Warteschlange angeordnet ist;
d) sequentielles, asynchrones und von der Aufzeichnung unabhängiges Lesen der genannten ringförmigen Warteschlange im Namen unabhängiger Lesevorgänge (AGENT(m)), die empfangene Ereignisse an einen oder mehrere Verwalter (MANAGER/PC) mitteilen, so daß die Verwalter eine entsprechende Kopie der Zustandsinformation auf den neuesten Stand bringen können;
e) nach jedem Schreiben in die Warteschlange Überprüfung des Vorhandenseins einer Overflow-Situation der Warteschlange für jeden der genannten Lesevorgänge, wobei die Situation wahr ist, wenn ein neueres Ereignis über ein voraufgegangenes geschrieben wird, das noch nicht gelesen wurde;
f) Aktualisierung eines Overflow-Vektors (O), dessen Elemente (O(m)) die logischen Werte der Overflow-Bedingungen einer entsprechenden Anzahl von Lesevorgängen (AGENT(m)) enthalten;
g) Zurücksetzung auf einen "Falschen" logischen Wert der genannten Elemente (O(m)) des genannten Overflow-Vektors (O) und Lesen des Inhalts (VMBF(i)) des genannten Zustandspeichers im Namen der genannten Lesevorgänge, die ein Overflow in der Warteschlange (Q) aufweisen, und dann erneute Durchführung des genannten Schrittes d), wodurch die genannte Ausrichtung verwirklicht wird.

2. Ausrichtungsvorgang entsprechend Anspruch, dadurch gekennzeichnet, daß die genannten Elemente (O(m)) des Overflow-Vektors (O) auch während der Durchführung des Ausrichtungsschrittes g) zur Wiederholung seiner Durchführung im Fall eines erneuten Overflows.

3. Ausrichtungsverfahren entsprechen Anspruch 1 oder 2, dadurch gekennzeichnet, daß der im Namem der genannten Lesevorgänge (AGENT(m)) gelesene genannte Inhalt (VMBF(i)) des genannten Zustandsspeichers ein Teilsatz der Werte der genannten Zustandsvariablen (VMBF(i)) ist, die von den entsprechenden für alle Zustandsvariablen vorbestimmten Werte abweichen, die auch Default-Werte genannt werden und den genannten Verwaltern (MANGER/PC) bekannt sind.

4. Ausrichtungsverfahren entsprechend Anspruch 3, dadurch gekennzeichnet, daß am Anfang der genannten, von Default (VMBF(i)) abweichenden Werte eine Mitteilung gestellt wird, die die genannten Verwalter (MANAGER/PC) über die Tatsache informiert, daß die nächsten Ereignisse, die sie von den genannten Lesevorgängen (AGENT(m)) empfangen werden, Werte der genannten Zustandsvariablen (VMBF(i)) sind, die von default abweichen, und daß am Ende der genannten von default abweichenden Werten eine Mitteilung gesetzt wird, die das Ende des Empfangs der genannten von default abweichenden Werte erklären.

5. Ausrichtungsverfahren entsprechend irgendeinem der vorstehend genannten Ansprüche, dadurch gekennzeichnet, daß die genannten Lesevorgänge (AGENT(m)), die den entsprechenden Verwaltern (MANAGER/PC) die empfangenen Ereignisse mitteilen, die genannten Ereignisse Kommunikationsprotokollen (PROTOCOL STACK) anvertrauen, die den genannten Verwaltern die der Reihe nach empfangenen Ereignisse, wobei das sequentielle Sortieren der übertragenen Mitteilungen (EVENT(i), VMBF(i)) und auch die übertragung aller empfangenen Mitteilungen garantiert wird.

6. Ausrichtungsverfahren entsprechend Anspruch 1 oder 2, dadurch gekennzeichnet, daß die ringförmige Warteschlange (Q) mittels eines Schreibzeigers (W) geschrieben wird, der in der Warteschlange eine Schreibstartposition für ein in die Warteschlage (EVENT(i)) zuschreibendes folgendes Ereignis adressiert, und dadurch daß jeder Lesevorgang (AGENT(m)) die Warteschlange mittels eines entsprechenden Lesezeigers (R(m)) liest, der in der Warteschlange eine Lesestartposition für ein in der Warteschlange zu lesendes folgendes Ereignis (EVENT(i)) adressiert, wobei der genannte Schreibzeiger (W) und der genannte Lesezeiger (R(m)) durch ein Modul n nach jeder die ringförmige Warteschlange (Q), in der sie einbezogen sind, betreffende Operation erhöht werden, und wobei n, eine Anzahl von Elementen ist, die die Länge der Warteschlange definiert.

7. Ausrichtungsverfahren entsprechend Anspruch 6, dadurch gekennzeichnet, daß die Position in der Warteschlange (Q), die vom genannten Schreibzeiger (W) adressiert wird, immer der genannten in der durch einen entsprechenden Lesezeiger (R(m)) adressierten Position in der Warteschlange (Q) vorausgeht oder bestenfalls mit dieser übereinstimmt.

8. Ausrichtungsverfahren entsprechend den Ansprüchen 1 und 7, dadurch gekennzeichnet, daß eine Overflow-Situation für einen Lesevorgang (AGENT(m)) als wahr angesehen wird, wenn der entsprechende Lesezeiger (R(m)) mit dem genannten Schreibzeiger (W) übereinstimmt.

9. Ausrichtungsverfahren entsprechend den Ansprüchen 1 und 8, dadurch gekennzeichnet, daß, wenn ein Element (O(m)) des genannten Overflow-Vektors (O) einen "falschen" logischen Wert hat und gleichzeitig der Wert des genannten Lesezeigers (R(m)) eines Lesevorgangs (AGENT(m)) verbunden mit dem genannten Element (O(m)) mit dem Wert des genannten Schreibzeigers (W) übereinstimmt, die genannte ringförmige Warteschlange (Q) für diesen Lesevorgang leer ist.

10. Ausrichtungsverfahren entsprechend Anspruch 7, dadurch gekennzeichnet, daß der Zwang des Vorhergehens oder bestenfalls des Übereinstimmens der genannten Schreibposition in der ringförmigen Warteschlange (Q) im Vergleich zu der genannten Leseposition dadurch erreicht wird, daß ein Schreiben als absolut erste Operation in der ringförmigen Warteschlange (Q) ausgeführt wird und kein Lesen der ringförmigen Warteschlange (Q) erfolgt, wenn der Wert eines Lesezeigers (R(m)) mit dem Wert des genannten Schreibzeigers (W) übereinstimmt.

11. Ausrichtungsverfahren entsprechend Anspruch 1, dadurch gekennzeichnet, daß die Länge der genannten ringförmigen Warteschlange (Q) durch sukzessive Approximationen in den folgenden Schritten optimiert wird:
- Speichern einer ersten Schätzung der Länge der Warteschlange;
- Schätzung des durchschnittlichen Füllungsgrades der Warteschlange während einer langen Beobachtungsperiode;
- Schätzung der Overflow-Raten während einer vorherbestimmten Beobachtungsperiode;
- Variation der geschätzten gespeicherten Länge durch eine solche Größe, daß sich der durchschnittliche Füllgrad und/oder die Overflow-Raten verringern;
- Wiederholung des zweiten, dritten und vierten Schritts bis eine optimale Länge erreicht wird, so daß die genannte ringförmige Warteschlange (Q) im Durchschnitt während der langfristigen Beobachtung leer bleibt und die genannten Overflow-Raten auf null oder sehr geringe Werte fallen; und
- Steigerung der optimalen Länge durch eine geeignete Toleranzgrenze, die weitere schwer vorhersehbare Ursachen berücksichtigt, und die geeignet sind, Spitzen der genannten innerhalb der genannten ringförmigen Warteschlangen (Q) geschriebenen Ereignisse zu verursachen.

12. Verwaltungssystem eines Kommunikationsnetzes, das einen oder mehrere unabhängige Kommunikationsnetzverwalter (MANAGER/PC) eines selben durch ein Kommunikationsnetz verwaltetes Teilsystems (SDH-ECF, SDH-MX/DX, LP(1-2), LP(1-3), LP(1-4), SDH-RIG) , wobei das genannte Teilsystem folgende Elemente umfaßt:
Mittel zur Bemusterung der Werte der Zustandsvariablen (V(i)) des genanten netzverwalteten Teilsystems;
ein Zustandsspeicher, in dem die genannten bemusterten Werte der Zustandsvariablen (V(i)) gespeichert werden, wobei der Inhalt des genannten Speichers einem effektiven Zustand entspricht;
erste Mittel zum Vergleich des genannten effektiven Zustands mit einen voraufgegangenen Zustand, wobei jeweils ein Ereignis (EVENT(i)) identifiziert, wenn die verglichenen werte von einander abweichen;
ein Ereignispuffer mit der Länge von n Ereignissen, in dem die Ereignisse sequentiell aufgezeichnet sind, und zwar auf eine asynchrone und unabhängig Weise von der Aufzeichnung, für unabhängige Lesevorgänge (AGENT(m)), die die empfangenen Ereignisse einem oder mehreren Netzverwaltern melden, so daß die Verwalter die entsprechende Kopie der Netzteilsystemsinformation aktualisieren können;
ein Schreibzeiger (W) und genau so viele Lesezeiger (R(m)) wie Lesevorgänge (AGENT(m)) vorhanden sind, wobei die genannten Zeiger eine entsprechende nächste Schreib- oder Leseposition in dem genannten Puffer (Q) adressieren und einheitlich um Module n, nach jeder entsprechenden Schreib- oder Leseroperation erhöht werden, wobei der Schreibzeiger (W) immer den genannten Lesezeigern vorausgeht oder diese bestenfalls überlappen;
zweite Vergleichsmittel, die nach jedem Schreiben im Ereignispuffer (Q) den Wert des genannten Schreibzeigers (W) mit den Werten der genannten Lesezeigern (R(m)) vergleichen, wobei die gleichwertigen Ergebnisse im Vergleich der Wahrheit der Overflow-Situationen des genannten Puffers einer entsprechenden Anzahl von Lesevorgängen (AGENT(m)) entsprechen;
ein Overflow-Vektor (O), dessen Elemente (O(m)) mit entsprechenden Lesevorgängen verbunden sind und die durch "wahre" oder "falsche" logische Werte der genannten Overflow-Bedingungen aktualisiert werden;
zweite Lesemittel, die, nach dem Zurücksetzen der genannten Elemente (O(m)) des Overflow-Vektors (O) auf einen "Faschen" logischen Wert, den Inhalt (VMBH(i) des genannten Zustandspeichers lesen und ihn an die genannten Lesevorgänge (AGENT(m)) weiterleiten, für die eine entsprechende Overflow-Bedingung wahr ist, und dann die Funktion der genannten ersten Lesemittel ermöglichen und dadurch ein Ausrichten der genannten entsprechenden Kopie der Netzteilsysteminformation im Besitz eines Verwalters mit der effektiven Zustandsinformation des genannten Teilsystems ausführen.

13. Kommunikationsnetzverwaltungssystem entsprechend Anspruch 12, dadurch gekennzeichnet, daß die genannten Elemente (O(m)) des Overflow-Vektors (O) auch während der Durchführungs des Ausrichtungsschrittes i) zur Widerholung der Durchführung des selben im Fall eines erneuten Overflows.

14. Kommunikationsnetzverwaltungssystem entsprechend Anspruch 12 oder 13, dadurch gekennzeichnet, daß der Inhalt (VMBH(i)) des genannten, im Namen der genannten Lesevorgänge (AGENT(m)) gelesenen Zustandsspeicher ein Teilsystem von werten der genannten Zustandsvariablen (VMBH(i)) ist, die von den entsprechenden für alle Zustandsvariablen vorabbestimmten Werte, auch "default" genannt, abweichen und den genannten Verwaltern (MANAGER/PC) bekannt sind.

15. Kommunikationsnetzverwaltungssystem entsprechend Anspruch 14, dadurch gekennzeichnet, daß an der Spitze der genannten von Default (VMBF(i)) abweichenden Werte eine Mitteilung placiert ist, die die genannten Verwalter (MANAGER, PC) über die Tatsache informiert, daß es sich bei den nächsten Ereignisse, die sie von den genannten Lesevorgängen (AGENT(m)) empfangen werden, um Werte der genannten Zustandsvariablen (VMBF(i)) handelt, die von Default abweichen, und daß am Ende der genannten von Default abweichenden Werte eine Mitteilung über das Ende des Empfangs der genannten von Default abweichenden Werte placiert ist.

16. Kommunikationsnetzverwaltungssystem entsprechend irgend-einem der Ansprüche von 12 bis 15, dadurch gekennzeichnet, daß die genannten Lesevorgänge (AGENT(m)), die den genannten Verwaltern mitteilen (MANAGER/PC) die empfangenen Ereignisse mitteilen, die genannten Ereignisse den Kommunikationsmitteln (MCF) mitteilen, die die geeigneten Kommunikationsprotokolle (PROTOCOL STACK) verarbeiten, wobei die genannten Kommunikationsmittel (MCF) den genannten Verwaltern die ihrerseits empfangenen Ereignisse übertragen, und die genannten Protokolle garantieren das sequentielle Sortieren der übertragenen Mitteilungen (EVENT(i), VMBF(i)) und die Zustellung aller empfangenen Mitteilungen.

17. Kommunikationsnetzverwaltungssystem entsprechend Anspruch 12, dadurch gekennzeichnet, daß, wenn ein Element (O(m)) des genannten Overflow-Vektors (O) einen "falschen" logischen Wert hat, und gleichzeitig der Wert eines Lesezeigers (R(m)) eines Lesevorgangs (AGENT(m)) verbunden mit dem genannten Element (O(m)) mit dem Wert des genannten Schreibzeigers übereinstimmt, dann ist der genannte Ereignispuffer (Q) für diesen Lesezeiger leer,

18. Kommunikationsnetzverwaltungssystem entsprechend Anspruch 12, dadurch gekennzeichnet, daß man den Zwang des Voraufgehens oder bestenfalls des Übereinstimmens des genannten Schreibzeigers (W) im Vergleich zu den genannten Lesezeigern (R(m)) durch erreicht, daß ein Schreiben als die absolut erste Tätigkeit innerhalb des genannten Ereignispuffers (Q) bestimmt und keinerlei Lesen des genannten Puffers (Q) durchgeführt wird, wenn der Wert eines Lesezeigers (R(m)) mit dem Wert des genannten Schreibzeigers (W) übereinstimmt.

19. Kommunikationsnetzverwaltungssystem entsprechend irgend-einem der Ansprüche von 12 bis 18, dadurch gekennzeichnet, daß folgende genannten Elemente: Bemusterungsmittel, Zustandsspeicher, erste und zweite Vergleichsmittel, Ereignispuffer (Q), erste und zweite Lesemittel, Schreibzeiger (W), Lesezeiger (R(m)) und Overflow-Vektor (O), die im netzverwalteten Teilsystem enthalten sind, mittels eines Mikroprozessors realisiert werden.

## Revendications

1. Procédé de réalignement d'une copie de l'information d'état d'un sous-système géré par un réseau de communication (SDH-ECF, SDH-MX/DX, LP(1-2), LP(1-3), LP(1-4), SDH-RIG) appartenant à un ou plusieurs gérants indépendants de réseaux de communications (MANAGER, PC) avec l'information de l'état effectif du dît sous-système de réseau, le réalignement partant d'un état initial connu par les dits gérants et étant effectué par le sous-système géré moyennant les phases suivantes:
a) échantillonnage des valeurs des variables d'état (V(i)) et comparaison des valeurs échantillonnées avec les valeurs des variables d'état échantillonnées avant (VM(i)) et mémorisées dans une mémoire d'état et détection d'un événement (EVENT (i)) chaque fois, que les valeurs comparées diffèrent;
b) mise à jour du contenu de la dite mémoire d'état à chaque événement détecté obtenant le dît état effectif;
c) registration de manière séquentielle des dits événements dans une mémoire d'étêtements (Q) organisée comme une queue circulaire longue de n, étêtements;
d) lecture de la dite queue circulaire de manière séquentielle et de manière asynchrone et indépendante par rapport à la registration, pour le conte des procès indépendants de lecture (AGENT(m)), qui reportent aux dits un ou plusieurs gérants (MANAGER, PC) des événements reçus, afin que les gérants peuvent mettre à jour une copie respective de l'information d'état;
e) contrôle après chaque registration de queue la présence d'une condition d'overflow de la queue pour chacun des procès de lecture, la condition étant juste, quand un événement récent est juxtaposé à un événement à distance pas encore lu;
f) mise à jour d'un vecteur d'overflow (O) dont les éléments (O(m)) contiennent les valeurs logiques des conditions d'overflow d'un nombre correspondant de procès de lecture (AGENT(m));
g) remise à une "Fausse" valeur logique des éléments (O(m)) du dît vecteur d'overflow (O) et lecture du contenu (VMBF(i)) de la dite mémoire d'état pour le compte des dits procès de lecture, qui présentent un overflow dans la queue (Q), et puis l'exécution de nouveau de la phase effectuant de cette manière le dit réalignement.

2. Procédé de réalignement selon la revendication 1, où les dits éléments (O(m)) du vecteur d'overflow (O) sont aussi contrôlés pendant l'exécution de la phase de réalignement g) pour la réiteration de l'exécution de ceci en cas de nouveau overflow.

3. Procédé de réalignement selon la revendication 1 ou 2, caractérisé en ce que le dît contenu (VMBF(i)) de la dite mémoire d'état lu pour le compte des dits procès de lecture (AGENT(m)) est un sous-ensemble de valeurs des dites variables d'état (VMBF(i)), qui diffèrent des valeurs respectives prédéterminées pour toutes les variables d'état, appelées aussi valeurs de défaut, et déjà connues au dits gérants (MANAGER, PC).

4. Procédé de réalignement selon la revendication 3, caractérisé en ce qu'en tête des dites valeurs différentes de défaut (VMBF(i)) est placé un message, qui informe les dits gérants (MANAGER/PC) du fait, que l'événement suivant, qu'ils vont recevoir des dits procès de lecture (AGENT(m)) sont des valeurs des dites variables d'état (VMBF(i)) différentes de défaut, et qu'en queue des dites valeurs différentes de défaut est placé un message déclarant la fin de le réception des dites valeurs différente de défaut.

5. Procédé de réalignement selon n'importe quelle des revendications ci-dessus, caractérisé en ce que les dits procès de lecture (AGENT(m)), qui signalent aux gérants respectifs (MANAGER,PC) les événements reçus, confient les dits événements à des protocoles de cdmmunications (PROTOCOL STACK), qui fournissent aux dits gérants les événements reçus à leur tour garantissant la mise en ordre séquentiel des messages transférés (EVENT(i), (VMBF(i)) et assurant aussi la distribution de tous les messages.

6. Procédé de réalignement selon la revendication 1 ou 2, où la dite queue circulaire (Q) est registrée par un pointeur d'écriture (W), qui adresse dans la queue une position de début d'écriture pour un prochain événement à registrer dans la queue (EVENT(i)), et où chaque procès de lecture (AGENT(m) lit la queue (Q) par un pointeur de lecture relatif (R(m)), qui adresse dans la queue une position de début de lecture pour l'événement suivant à lire dans la queue (EVENT(i)), le dit pointeur d'écriture (W) et les dits pointeurs pointeurs de lecture (R(m)) étant augmentés par module n après chaque opération signalée à la queue circulaire (Q) dans laquelle elles sont impliquées, où n est un nombre d'éléments, qui définit la longueur de la queue.

7. Procédé de réalignement selon la revendication 6, où la position dans la queue (Q) adressée par le dit pointeur d'écriture (W) précède toujours, ou au mieux coïncide avec la dite position dans la queue (Q) adressée par un pointeur de lecture respectif (R(m)).

8. Procédé de réalignement selon les revendications 1 et 7, où une condition d'overflow est considérée réelle pour un procès de lecture (AGENT(m)), quand le pointeur d'écriture (R(m)) coïncider avec le dit pointeur d'écriture (W).

9. Procédé de réalignement selon les revendications 1 et 8, où, quand un élément (O(m)) du dit vecteur d'overflow (O) a une valeur logique "fausse" et en même temps la valeur du dît pointeur de lecture (R(m)) d'un procès de lecture (AGENT(m)) relié au dît élément (O(m)) coïncide avec la valeur du dit pointeur d'écriture (W) la dite queue circulaire résulte d'être vide pour ce procès de lecture.

10. Procédure de réalignement selon la revendication 7, où la contrainte de précéder ou au mieux de coïncider de la dite position d'écriture dans la queue circulaire (Q) par rapport à la dite position de lecture sera réalisée en imposant une écriture comme l'opération première en termes absolus dans la queue circulaire (Q) et ne pas effectuant aucune lecture de la queue circulaire (Q), quand la valeur d'un pointeur de lecture (R(m)) coïncide avec la valeur du dit pointeur d'écriture (W).

11. Procédé de réalignement selon la revendication 1, où la longueur de la dite queue circulaire (Q) est optimisée par des approximations successives dans les phases suivantes:
- mémorisation d'une estimation initiale de la longueur de la queue;
- évaluation du degré moyen de remplissage de la queue pendant un long période d'observation;
- évaluation des taux d'overflow pendant un période d'observation prédéterminé;
- variation de la longueur mémorisée estimée par une quantité de manière que le degré moyen des taux de remplissage et/ou d'overflow descendent;
- itération de la deuxième, troisième et quatrième phase jusqu'à atteindre une longueur optimale ainsi que la dite queue circulaire (Q) reste vide en moyenne pendant une observation à à long terme et que les taux d'overflow tombent à zéro ou à des valeurs très basses; et
- augmentation de la longueur optimale par une marge appropriée, qui tient compte de causes additionnelles, que l'on peut prévoir difficilement, et qui sont apte à causer des pointes des dits événements écrits à l'intérieur de la dite queue (Q).

12. Système pour la gestion de réseaux de communications, qui comprend un ou plusieurs gérants indépendants de réseaux de communication (MANAGER/PC) d'un même sous-système géré par un réseau de communication (SDH-ECF, SDH-MX/DX, LP(1-2), LP(1-3), LP(1-4), SDH-RIG), et le dit sous-système comprend:
des moyens pour l'échantillonnage des valeurs de variables d'état (V(i)) du dît sous-système géré par le réseau;
une mémoire d'état gans laquelle les dites valeurs de variables d'état (V(i)) sont registrées, le contenu de la dite mémoire correspondant à un état actuel;
des premiers moyens pour la comparaison du dît état actuel avec un état précédent et qui détectent un événement (EVENT(i)) chaque fois, que les valeurs comparées diffèrent;
une mémoire d'événement longue de n événements (Q), dans laquelle les dits événements vont être registrés de manière séquentielle;
des premiers moyens de lecture, qui lisent de manière séquentielle la dite mémoire d'événements et de manière asynchrone et indépendamment de l'écriture pour le compte de procès de lecture indépendants (AGENT(m)), qui signalent les événements reçus aux dits un ou plusieurs gérants de réseau, ainsi que les gérants peuvent mettre à jour une copie respective de l'information d'état du sous-système de réseau;
un pointeur d'écriture (W) et un nombre de pointeurs de lecture égal au nombre de procès de lecture (AGENT(m)), où les dits pointeurs adressent une position d'écriture ou de lecture respective suivante dans la dite mémoire (Q) et ils seront augmentés unitairement module n à chaque respective opération d'écriture ou de lecture dans la dite mémoire Q et le pointeur d'écriture (W) précède toujours les dits pointeurs de lecture (R(m)) ou au moins les superposent;
des deuxième moyens de comparaison, qui après chaque écriture dans la mémoire d'événements (Q) comparent la valeur du dit pointeur d'écriture (W) avec les valeurs des dits pointeurs de lecture (R(m)), les résultats d'égalité dans la comparaison correspondant à la vérité des conditions d'overflow de la dite mémoire d'un nombre correspondant de procès de lecture (AGENT(m));
un vecteur d'overflow (O), dont les éléments (O(m)) seront combinés avec des procès respectifs de lecture (AGENT(m)) et mis à jour par des valeurs logiques "Vraies" ou "Fausses" des dites conditions d'overflow;
des deuxièmes moyens de lecture, qui après la remise des dits éléments (O(m)) du vecteur d'overflow (O) à une valeur "Fausse" lisent le contenu (VMBH(i)) de la dite mémoire d'état et la transfèrent aux dits procès de lecture (AGENT(m)), pour lesquels une condition d'overflow respective est vraie, puis rendant possible l'opération des dits premiers moyens de lecture et effectuant de cette façon un réalignement de la dite copie respective de l'information d'état du sous-système de réseau en possession d'un manager avec l'information d'état actuelle du dit sous-système.

13. Système de gestion de réseau de communication selon la revendication 12, où les dits éléments (O(m)) du vecteur d'overflow (O) sont contrôlés aussi pendant l'exécution de la phase de réalignement i) pour la réitération de l'exécution de celui-ci en cas d'un nouveau overflow.

14. Système de gestion de réseau de communication selon la revendication 12 ou 13, caractérisé en ce que le dit contenu (VMBH(i)) de la dite mémoire d'état lu pour le compte des dits procès de lecture (AGENT(m)) est un sous-système de valeurs des dites variables d'état (VMBH(i)), qui diffèrent des valeurs respectives prédéterminées pour toutes les variables d'état appelées aussi défaut et connues par le dît manager (MANAGER,PC).

15. Système de gestion de réseau de communication selon la revendication 14, caractérisé en ce que en tête des dites valeurs différents de défaut (VMBF(i)) est placé un message, qui informe les dits managers (MANAGER,PC) du fait, que le événements suivants qu'ils vont recevoir des dits procès de lecture (AGENT(m)) sont des valeurs des dites variables d'état (VMBF(i) différentes de défaut, et en ce que en queue des dites valeurs différentes de défaut est placé un message de fin de réception de dites valeurs différentes de défaut.

16. Système de gestion de réseau de communication selon n'importe laquelle des revendications de 12 à 15, caractérisé en ce que les dits procès de lecture (AGENT(m)), qui signalent aux dits managers (MANAGER,PC) les événements reçus, confient les dits événements aux moyens de communication (MCF) fournissant aux dits managers les événements reçus à leur tour, et les dits protocoles assurent le tri des messages transférés (EVENT(i), VBBF(i)) et la distribution de tous les messages reçus.

17. Système de gestion de réseau de communication selon la revendication 12, caractérisé en ce qu'un élément (O(m)) du dît vecteur d'overflow (O) a une valeur logique "Fausse" et en même temps la valeur d'un pointeur de lecture (R(m)) d'un procès de lecture (AGENT(m)) joint au dit élément (O(m)) coïncide avec la valeur du dit pointeur d'écriture (W), la dite mémoire d'événements (Q) étant vide pour ce pointeur de lecture.

18. Système de gestion de réseau de communication selon la revendication 12, caractérisé en ce que la contrainte de précéder ou au moins de coïncider du dît pointeur d'écriture (W) par rapport au dits pointeurs de lecture (R(m)) est obtenue en imposant une écriture comme absolument la première opération effectuée dans cette mémoire d'événements (Q) et sans effectuer la lecture de la dite mémoire (Q), quand la valeur d'un pointeur de lecture (R(m)) coïncide avec la valeur du dit pointeur d'écriture (W).

19. Système de gestion de réseaux de communication selon quelconque des revendications de 12 à 18, caractérisé en ce que les dits éléments suivants : les moyens d'échantillonnage, la mémoire d'état, les premiers et deuxièmes moyens de comparaison, la mémoire d'événements (Q), les premiers et deuxièmes moyens de lecture, le pointeur d'écriture (W), les pointeurs d'écriture (R(m)) et le vecteur d'overflow compris-dans le sous-système géré par le réseau sont réalisés moyennant un microprocesseur.
